(19) **Europäisches Patentamt / European Patent Office / Office européen des brevets**

(11) **EP 4 529 302 A1**

(12) **EUROPEAN PATENT APPLICATION**
published in accordance with Art. 153(4) EPC

(43) Date of publication:
26.03.2025 Bulletin 2025/13

(21) Application number: 23822976.9

(22) Date of filing: 06.06.2023

(51) International Patent Classification (IPC):
**H04W 56/00** (2009.01)

(52) Cooperative Patent Classification (CPC):
**H04W 56/00**

(86) International application number:
**PCT/CN2023/098657**

(87) International publication number:
**WO 2023/241407 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 17.06.2022 CN 202210692328

(71) Applicant: Huawei Technologies Co., Ltd.
Shenzhen, Guangdong 518129 (CN)

(72) Inventors:
• LUO, Zhihu
Shenzhen, Guangdong 518129 (CN)
• CHEN, Jun
Shenzhen, Guangdong 518129 (CN)
• WU, Yiling
Shenzhen, Guangdong 518129 (CN)
• JIN, Zhe
Shenzhen, Guangdong 518129 (CN)

(74) Representative: Goddar, Heinz J.
Boehmert & Boehmert
Anwaltspartnerschaft mbB
Pettenkoferstrasse 22
80336 München (DE)

(54) **SYNCHRONIZATION METHOD AND COMMUNICATION APPARATUS**

(57) Embodiments of this application provide a synchronization method and a communication apparatus. When a low-power communication system such as passive IoT or ambient power-enabled IoT is introduced to an NR system, a synchronization signal of the low-power communication system can coexist with a subcarrier of the NR system. The method includes: After generating a synchronization signal, a first device sends the synchronization signal to a second device. The synchronization signal is generated in an orthogonal frequency division multiplexing OFDM manner, the synchronization signal includes a first signal and/or a second signal, the first signal is used to determine a time domain start position occupied by data sent by the first device to the second device, and the second signal is used to determine a frequency at which the second device sends data to the first device.

FIG. 11

## Description

This application claims priority to Chinese Patent Application No. 202210692328.9, filed with the China National Intellectual Property Administration on June 17, 2022 and entitled "SYNCHRONIZATION METHOD AND COMMUNICATION APPARATUS", which is incorporated herein by reference in its entirety.

## TECHNICAL FIELD

This application relates to the communication field, and in particular, to a synchronization method and a communication apparatus.

## BACKGROUND

With development of an internet of things (internet of things, IoT) technology, a service life of an internet of things terminal device becomes a bottleneck of IoT development. Power consumption of the terminal device may be reduced by using a low-power communication technology, to achieve an effect of increasing the service life of the terminal device. Therefore, passive internet of things (passive IoT) or ambient power-enabled internet of things (ambient power-enabled IoT) becomes possible.

Currently, in Release 18 (release 18, R18) of the 3rd generation partnership project (3rd generation partnership project, 3GPP), it is planned that a 5th generation (5th generation, 5G) system or a new radio (new radio, NR) system is enabled to support a low-power communication system such as the passive IoT or the ambient power-enabled IoT. However, in a related specification of a synchronization signal of the low-power communication system, compatibility between the synchronization signal and the NR system is not considered. In this case, when the synchronization signal of the low-power communication system is directly used in the NR system, interference exists between a time domain waveform of the synchronization signal and a time domain waveform of a subcarrier of the NR system. Therefore, when the low-power communication system such as the passive IoT or the ambient power-enabled IoT is introduced to the NR system, how to enable the synchronization signal of the low-power communication system to coexist with the subcarrier of the NR system is an urgent problem to be resolved currently.

## SUMMARY

Embodiments of this application provide a synchronization method and a communication apparatus. When a low-power communication system such as passive IoT or ambient power-enabled IoT is introduced to an NR system, a synchronization signal of the low-power communication system can coexist with a subcarrier of the NR system.

To achieve the foregoing objective, the following technical solutions are used in embodiments of this application.

According to a first aspect, a synchronization method is provided. The method may be performed by a first device; may be performed by a component of a first device, for example, a processor, a chip, or a chip system of the first device; or may be implemented by a logical module or software that can implement all or some functions of a first device. The following uses an example in which the first device performs the method for description. The method includes: The first device generates a synchronization signal, and sends the synchronization signal to a second device. The synchronization signal is generated in an orthogonal frequency division multiplexing OFDM manner, the synchronization signal includes a first signal and/or a second signal, the first signal is used to determine a time domain start position occupied by data sent by the first device to the second device, and the second signal is used to determine a frequency at which the second device sends data to the first device. Because the synchronization signal is generated in the OFDM manner, a time domain waveform of the synchronization signal may be a waveform obtained by superposing a plurality of orthogonal subcarriers. Therefore, an orthogonal relationship exists between the time domain waveform of the synchronization signal and a time domain waveform of a subcarrier of an NR system. Therefore, when a low-power communication system such as passive IoT or ambient power-enabled IoT is introduced to the NR system, a synchronization signal of the low-power communication system can coexist with the subcarrier of the NR system.

According to a second aspect, a synchronization method is provided. The method may be performed by a second device; may be performed by a component of a second device, for example, a processor, a chip, or a chip system of the second device; or may be implemented by a logical module or software that can implement all or some functions of a second device. The following uses an example in which the second device performs the method for description. The method includes: The second device receives a synchronization signal from a first device, and performs time synchronization and/or frequency synchronization based on the synchronization signal. The synchronization signal is generated in an orthogonal frequency division multiplexing OFDM manner, the synchronization signal includes a first signal and/or a second signal, the first signal is used to determine a start position occupied by data sent by the first device to the second device, and the second signal is used to determine a frequency at which the second device sends data to the first device.

The synchronization signal is generated in the OFDM manner, so that the synchronization signal and an OFDM subcarrier of the data sent by the first device to the second device are orthogonal to each other. Further, when receiving a signal, the second device may completely separate a time domain waveform of the synchronization signal from a time domain waveform of the OFDM subcarrier of the data sent by the first device, to avoid interference. Therefore, when a low-power communication system such as passive IoT or ambient power-enabled IoT is introduced to an NR system, a synchronization signal of the low-power communication system can coexist with a subcarrier of the NR system.

With reference to the first aspect or the second aspect, in a possible implementation, the synchronization signal includes the first signal and the second signal, where the second signal is located after the first signal. Based on this solution, after the second device detects the first signal, the second device may detect the second signal, obtain a time length of the second signal, and further calculate a BLF with reference to a DR carried in downlink data.

With reference to the first aspect or the second aspect, in a possible implementation, the first signal and the second signal are located in a same OFDM symbol. Based on this solution, after detecting the first signal, the second device may determine to start to receive the second signal.

With reference to the first aspect or the second aspect, in a possible implementation, a waveform of the synchronization signal is a cyclic prefix-orthogonal frequency division multiplexing CP-OFDM waveform.

With reference to the first aspect or the second aspect, in a possible implementation, the waveform of the synchronization signal is generated in a CP-OFDM manner based on a first sequence.

With reference to the first aspect or the second aspect, in a possible implementation, the waveform of the synchronization signal is generated in a discrete fourier transform DFT transform precoding manner.

With reference to the first aspect or the second aspect, in a possible implementation, that the waveform of the synchronization signal is generated in a discrete fourier transform DFT transform precoding manner includes: The waveform of the synchronization signal is a waveform obtained through CP-OFDM on a second sequence, where the second sequence is a sequence obtained through DFT transform precoding on the first sequence.

With reference to the first aspect or the second aspect, in a possible implementation, a time domain resource of the first signal includes first K time units in N time units corresponding to a wanted signal in one OFDM symbol, K is a positive integer, and the wanted signal in the OFDM symbol is a part other than a cyclic prefix CP in the OFDM symbol. Based on this solution, the second device may first detect the first signal before the second signal and the downlink data, to subsequently receive the downlink data and the second signal. In addition, from the perspective of time domain resource utilization for sending a signal, the first signal occupies only some time domain resources of the OFDM symbol. Therefore, an idle time domain resource of the OFDM symbol may be used for transmission of other content, for example, the second signal, data 0, or RTcal.

With reference to the first aspect or the second aspect, in a possible implementation, the time domain resource of the first signal further includes a part of time units corresponding to the CP in the OFDM symbol in which the first signal is located. Based on this solution, when the first signal is a low-level signal, the part of time units corresponding to the CP are added to the time domain resource of the first signal, so that duration of the low-level signal is long enough. Further, the first signal may be better distinguished from a low-level part of the second signal and/or a low-level part of the downlink data. In this way, when receiving a signal, the second device may determine that a low-level signal with a longest time length in the received signal is the first signal.

With reference to the first aspect or the second aspect, in a possible implementation, a signal carried in last S time units in the N time units corresponding to the wanted signal in the OFDM symbol in which the first signal is located is a low-level signal, a time length of the last S time units is greater than or equal to a time length of the CP in the OFDM symbol in which the first signal is located, and the wanted signal in the OFDM symbol is the part other than the CP in the OFDM symbol. In other words, the signal carried in the last S time units corresponding to the wanted signal in the OFDM symbol in which the first signal is located is the low-level signal, so that it can be ensured that a level of a signal of the CP is a low level. In this way, duration of a low-level part of the first signal may be increased.

With reference to the first aspect or the second aspect, in a possible implementation, a time domain resource of the second signal includes M of the N time units corresponding to the wanted signal in the OFDM symbol, M is a positive integer, and the wanted signal in the OFDM symbol is the part other than the CP in the OFDM symbol.

With reference to the first aspect or the second aspect, in a possible implementation, the synchronization signal includes the second signal, the waveform of the synchronization signal is generated in the CP-OFDM manner by performing the DFT transform precoding on the first sequence, the first sequence includes a third sequence, the third sequence is a sequence used to generate the second signal, M satisfies a first condition, and the first condition includes: N is L times of M, and a quantity of elements included in the first sequence is L times of a quantity of elements included in the third sequence, where N is a power of 2, and L is a positive integer.

With reference to the first aspect or the second aspect, in a possible implementation, M is a maximum value of a plurality of values that satisfy the first condition. Based on this solution, when the second device measures a time length of the second signal by using a clock edge, a measurement error may be reduced.

With reference to the first aspect, in a possible implementation, the method further includes: The first device receives capability information from the second device, where the capability information includes at least one of the following: whether the second device supports energy harvesting, whether the second device supports envelope detection, or whether the second device supports backscatter communication.

With reference to the second aspect, in a possible implementation, the method further includes: The second device sends the capability information to the first device, where the capability information includes at least one of the following: whether the second device supports the energy harvesting, whether the second device supports the envelope detection, or whether the second device supports the backscatter communication.

According to a third aspect, a communication apparatus is provided, configured to implement the foregoing various methods. The communication apparatus may be the first device in the first aspect, an apparatus including the first device, or an apparatus included in the first device, for example, a chip. Alternatively, the communication apparatus may be the second device in the second aspect, an apparatus including the second device, or an apparatus included in the second device. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module, respectively configured to implement the sending function and the receiving function in any one of the foregoing aspects and any one of the possible implementations of the foregoing aspects.

According to a fourth aspect, a communication apparatus is provided, including a processor and a memory. The memory is configured to store computer instructions. When the processor executes the instructions, the communication apparatus is enabled to perform the method in any one of the foregoing aspects. The communication apparatus may be the first device in the first aspect, an apparatus including the first device, or an apparatus included in the first device, for example, a chip. Alternatively, the communication apparatus may be the second device in the second aspect, an apparatus including the second device, or an apparatus included in the second device.

According to a fifth aspect, a communication apparatus is provided, including a processor and a communication interface. The communication interface is configured to communicate with a module outside the communication apparatus. The processor is configured to execute a computer program or instructions, to enable the communication apparatus to perform the method according to any one of the foregoing aspects. The communication apparatus may be the first device in the first aspect, an apparatus including the first device, or an apparatus included in the first device, for example, a chip. Alternatively, the communication apparatus may be the second device in the second aspect, an apparatus including the second device, or an apparatus included in the second device.

According to a sixth aspect, a communication apparatus is provided, including at least one processor. The processor is configured to execute a computer program or instructions stored in a memory, to enable the communication apparatus to perform the method in any one of the foregoing aspects. The memory may be coupled to the processor, or may be independent of the processor. The communication apparatus may be the first device in the first aspect, an apparatus including the first device, or an apparatus included in the first device, for example, a chip. Alternatively, the communication apparatus may be the second device in the second aspect, an apparatus including the second device, or an apparatus included in the second device.

According to a seventh aspect, a computer-readable storage medium is provided. The computer-readable storage medium stores a computer program or instructions. When the computer program or the instructions are executed on a communication apparatus, the communication apparatus is enabled to perform the method in any one of the foregoing aspects.

According to an eighth aspect, a computer program product including instructions is provided. When the computer program product runs on a communication apparatus, the communication apparatus is enabled to perform the method in any one of the foregoing aspects.

According to a ninth aspect, a communication apparatus (for example, the communication apparatus may be a chip or a chip system) is provided. The communication apparatus includes a processor, configured to implement the function in any one of the foregoing aspects.

In some possible designs, the communication apparatus includes a memory, and the memory is configured to store necessary program instructions and data.

In some possible designs, when the apparatus is the chip system, the apparatus may include a chip, or may include a chip and another discrete component.

It may be understood that, when the communication apparatus provided in any one of the third aspect to the ninth aspect is a chip, the foregoing sending action/function may be understood as an output, and the receiving action/function may be understood as an input.

For technical effects brought by any design of the third aspect to the ninth aspect, refer to technical effects brought by different designs of the first aspect or the second aspect. Details are not described herein again.

According to a tenth aspect, a communication system is provided. The communication system includes the first device in the foregoing aspects and the second device in the foregoing aspects.

**BRIEF DESCRIPTION OF DRAWINGS**

FIG. 1 is a diagram of an architecture of a backscatter communication system according to an embodiment of this application;

FIG. 2 is a diagram of an architecture of an ultra-high frequency radio frequency identification system according to an embodiment of this application;

FIG. 3 is a diagram of an architecture of a wake-up mechanism-based communication system according to an embodiment of this application;

FIG. 4 is a diagram of symbols of a PIE symbol of data 0 and a PIE symbol of data 1 according to an embodiment of this application;

FIG. 5 is a diagram of a frame structure of a downlink signal of a radio frequency identification system according to an embodiment of this application;

FIG. 6 is a diagram of a PIE symbol in which a preamble is used as a frame header according to an embodiment of this application;

FIG. 7 is a diagram of a PIE symbol in which a frame synchronization code is used as a frame header according to an embodiment of this application;

FIG. 8 is a diagram of an architecture of a communication system according to an embodiment of this application;

FIG. 9 is a diagram of an architecture of another communication system according to an embodiment of this application;

FIG. 10 is a diagram of hardware structures of a terminal device and an access network device according to an embodiment of this application;

FIG. 11 is a schematic flowchart of a synchronization method according to an embodiment of this application;

FIG. 12 is a diagram of a time domain resource of a synchronization signal according to an embodiment of this application;

FIG. 13 is a diagram of a time domain resource of another synchronization signal according to an embodiment of this application;

FIG. 14 is a diagram of a time domain resource of another synchronization signal according to an embodiment of this application;

FIG. 15 is a diagram of a structure of an OFDM symbol according to an embodiment of this application;

FIG. 16 is a diagram of a time domain resource of another synchronization signal according to an embodiment of this application;

FIG. 17 is a diagram of a time domain position relationship between a first signal and a second signal according to an embodiment of this application;

FIG. 18 is a diagram of another time domain position relationship between a first signal and a second signal according to an embodiment of this application;

FIG. 19 is a diagram of a module framework of a waveform generation manner of a synchronization signal according to an embodiment of this application;

FIG. 20 is a diagram of a module framework of another waveform generation manner of a synchronization signal according to an embodiment of this application;

FIG. 21 is a diagram of a time domain resource of a first signal according to an embodiment of this application;

FIG. 22 is a diagram of a structure of a downlink signal according to an embodiment of this application;

FIG. 23 is a diagram of a time length of each OFDM symbol in one slot in an NR system according to an embodiment of this application;

FIG. 24 is a diagram of value ranges of a first threshold and a second threshold according to an embodiment of this application;

FIG. 25 is a diagram of a time domain resource of a second signal according to an embodiment of this application;

FIG. 26 is a diagram of a time domain resource of another downlink signal according to an embodiment of this application;

FIG. 27 is a diagram of a time length of a clock counting measurement signal according to an embodiment of this application;

FIG. 28 is a diagram of a structure of a first device according to an embodiment of this application; and

FIG. 29 is a diagram of a structure of a second device according to an embodiment of this application.

# DESCRIPTION OF EMBODIMENTS

For ease of understanding technical solutions provided in embodiments of this application, technologies related to this application are first described briefly. The brief descriptions are provided in the following.

1. IoT:

The IoT is "an internet through which things are connected to each other". The IoT extends a user end of the internet to any object, so that any object can perform information exchange and communication. Such a communication manner is also referred to as machine type communication (machine type communication, MTC). A communication node is referred to as an MTC terminal or an MTC device. Typical IoT services include services such as smart grid, environment monitoring, smart agriculture, smart meter reading, and the like.

It may be learned from the typical IoT service that, in most cases, massive MTC terminals need to be deployed for the IoT. This requires that the MTC terminals can be obtained and used at low costs, and also requires that the MTC terminals can be used for long time. However, in most service scenarios, an external power supply cannot be provided for the massive MTC terminals. Therefore, the MTC terminals are powered by batteries. Moreover, a limited capacity of the battery and power consumption of the MTC terminal make use time of the MTC terminal limited. This increases maintenance difficulty and maintenance costs of the MTC terminal. In this case, IoT development is restricted.

To satisfy the foregoing requirements, a low-power communication technology such as a wireless power transmission technology, an envelope detection and demodulation technology, or a backscatter modulation technology may be used in the IoT. The backscatter (backscatter) communication technology is one of low-power communication technologies, and has features such as low costs and ultra-low power consumption. Therefore, the use time of the MTC terminal may be increased by using the backscatter communication technology.

2. Backscatter communication technology:

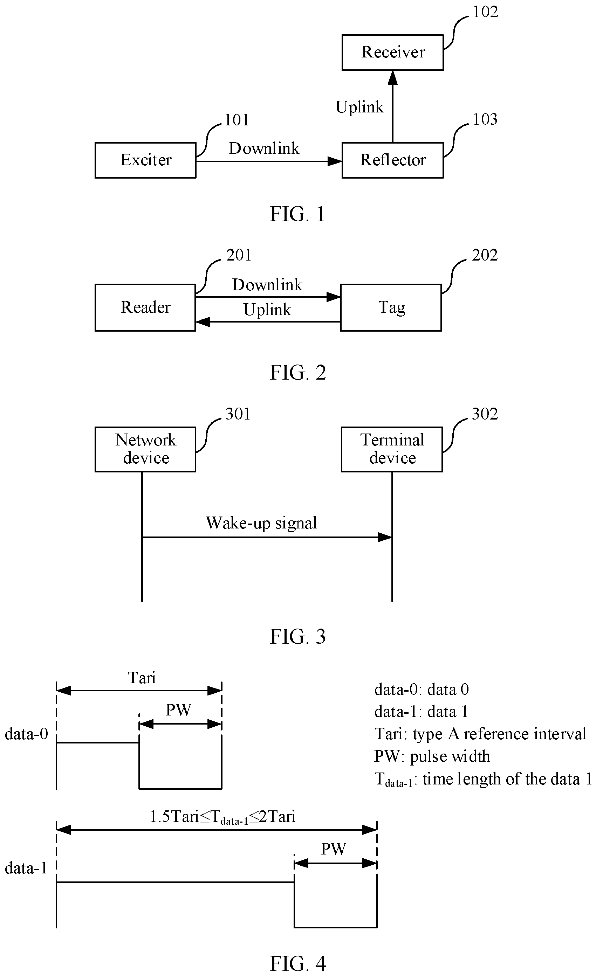

The backscatter communication technology is a communication technology based on wireless power transmission, envelope detection and demodulation, and backscatter modulation technologies. FIG. 1 shows an example of a diagram of an architecture of a backscatter communication system according to an embodiment of this application. As shown in FIG. 1, the backscatter communication system may include an exciter 101, a receiver 102, and a reflector 103. A communication link of the backscatter communication system includes a downlink and an uplink. The downlink may be a communication link over which the exciter 101 sends a signal to the reflector 103. The uplink may be a communication link over which the reflector 103 sends a signal to the receiver 102.

The exciter 101 and the receiver 102 may be deployed in a same device, or the exciter 101 and the receiver 102 may be separated.

The reflector 103 may be classified into a passive (passive) reflector and a semi-passive (semi-passive) reflector depending on whether the reflector 103 is powered by a battery. The passive reflector is not powered by a battery. In addition, because a downlink signal sent by the exciter 101 is a radio frequency signal, the passive reflector needs to rectify the downlink signal sent by the exciter 101, and uses a direct current signal output after rectification as a power supply, to supply power to an internal circuit of the passive reflector. Because the semi-passive reflector has a battery, the semi-passive reflector does not depend on the downlink signal sent by the exciter 101 for power supply.

For example, in the downlink, the exciter 101 may modulate the downlink signal in an amplitude shift keying (amplitude shift keying, ASK) manner, and the reflector 103 may demodulate the downlink signal by using a low-power-based envelope detector. In the uplink, the reflector 103 may change load of an antenna based on a to-be-sent information bit, so that the information bit may be modulated to an incident carrier (that is, a downlink signal), and then the downlink signal is reflected to the receiver 102. In this case, wireless transmission of the uplink signal is implemented. In this way, the reflector 103 does not need high-power devices such as a radio frequency oscillator, a power amplifier, and a low noise amplifier, so that the backscatter communication system has features of low costs and ultra-low power consumption.

With reference to the foregoing backscatter communication technology, the following uses an ultra-high frequency (ultra-high frequency, UHF) radio frequency identification (radio frequency identification, RFID) system as an example to describe an architecture of a communication system combining the IoT and the backscatter communication technology.

For example, FIG. 2 shows an example of a diagram of an architecture of the UHF RFID system according to an embodiment of this application. As shown in FIG. 2, the UHF RFID system may include a reader 201 and a tag 202. In a possible implementation, in the UHF RFID system, the exciter 101 and the receiver 102 shown in FIG. 1 are disposed in a same device, that is, the reader 201 may include the exciter 101 and the receiver 102. The tag 202 in the UHF RFID system may be the reflector 103 shown in FIG. 1. The reader 201 and the tag 202 may also be referred to as MTC terminals or MTC devices.

A communication link of the UHF RFID system also includes a downlink and an uplink. The downlink may be a communication link over which the reader 201 sends a signal to the tag 202. The uplink may be a communication link over which the tag 202 sends a signal to the reader 201.

The reader 201 sends a downlink signal to the tag 202. The downlink signal may include a downlink excitation signal and data. The downlink excitation signal may be used to provide energy for the tag 202. The data may be used for transmission of downlink signaling to the tag 202, and used by the tag 202 to send an uplink signal to the reader 201 by using a backscatter technology. In this way, the reader 201 may identify an identity (identity, ID) of the tag 202 by sending the downlink signal and receiving the uplink signal, and further perform a read or write operation on the tag 202.

For example, the downlink signaling is a query command (Query). Information carried in the data may include: a command word, a divide ratio (divide ratio, DR), a coding scheme, a selection command (select) configuration parameter, a session layer (session), or the like.

It should be noted that "data" may be data that needs to be sent by a transmit end to a receive end. The data may be referred to as valid data or wanted data. In other words, "data", "valid data", or "wanted data" may be replaced with each other. This is uniformly described herein. Details are not described below again.

3. Wake-up mechanism-based communication system:

The wake-up mechanism-based communication system may also reduce power consumption of the MTC terminal, and further increase the use time of the MTC terminal. FIG. 3 shows an example of a diagram of an architecture of the wake-up mechanism-based communication system according to an embodiment of this application. As shown in FIG. 3, the wake-up mechanism-based communication system may include a network device 301 and a terminal device 302. The network device 301 and the terminal device 302 may also be referred to as MTC terminals or MTC devices. In the system, the terminal device 302 may be in a power saving mode (power saving mode, PSM) or a sleep mode. The network device 301 may send a downlink wake-up signal (wake-up signal, WUS) to the terminal device 302 in the PSM or the sleep mode, to notify the terminal device 302 to receive and send data. In this way, an energy saving effect of the terminal device 302 can be achieved.

The network device 301 may be an access network device in an NR system. Alternatively, the network device 301 may be the reader 201 in the UHF RFID system.

For example, a modulation scheme of the wake-up signal may be on-off keying (on-off keying, OOK) or ASK, so that the terminal device 302 may demodulate, based on the low-power envelope detector, the downlink signal sent by the network device 301. In this way, standby power consumption of the terminal device 302 can be reduced, and a standby life of the terminal device 302 can be prolonged.

It should be noted that the foregoing backscatter communication technology may be combined with a wake-up mechanism. For example, the tag 202 in FIG. 2 may be in a PSM or a sleep mode, and the reader 201 may send a wake-up signal to the tag 202 in the PSM or the sleep mode, to notify the tag 202 to send and receive data.

It should be understood that the foregoing communication system based on the backscatter communication technology and the foregoing wake-up mechanism-based communication system are usually asynchronous systems. In other words, time synchronization is not performed on the reader 201 and the tag 202, or time synchronization is not performed on the network device 301 and the terminal device 302. Therefore, a preamble (preamble) or a synchronization signal needs to be inserted before data of a downlink signal, so that the tag 202 or the terminal device 302 completes detection and synchronization of the downlink signal.

4. Pulse interval encoding (pulse interval encoding, PIE):

According to the 18000-6C standard of the international standardization organization (international standardization organization, ISO) or the international electrotechnical commission (international electrotechnical commission, IEC), data in a downlink signal of the RFID system is encoded in a PIE manner. In the PIE, data is defined as "0" or "1" by using different time lengths of high and low levels. FIG. 4 shows an example of a PIE symbol of data 0 (data-0) and a PIE symbol of data 1 (data-1). As shown in FIG. 4, a time length $T_{data-0}$ of the data 0 is a type A reference interval (type A reference interval, Tari), where a time length of a low level is a pulse width (pulse width, PW). A value range of a time length $T_{data-1}$ of the data 1 is [1.5Tari, 2Tari], where a length of a low level is a PW. A value range of the Tari is [6.25 $\mu$s, 25 $\mu$s], a value range of the PW is [max(0.265Tari, 2 $\mu$s), 0.525Tari], and max() indicates that a maximum value is taken.

It should be noted that in this embodiment of this application, a meaning of "time length" is the same as a meaning of "duration", and both represent a time length occupied by a signal, a symbol, a level, or the like in time domain. In other words, "time length" and "duration" may be replaced with each other. This is uniformly described herein. Details are not described below again.

As described above, to enable the tag 202 to complete the detection and the synchronization of the downlink signal, the preamble or the synchronization signal needs to be inserted before the data of the downlink signal in the RFID system. Correspondingly, how to insert the preamble or the synchronization signal before the data of the downlink signal is specified in the ISO/IEC 18000-6C standard, and is specifically described in the following.

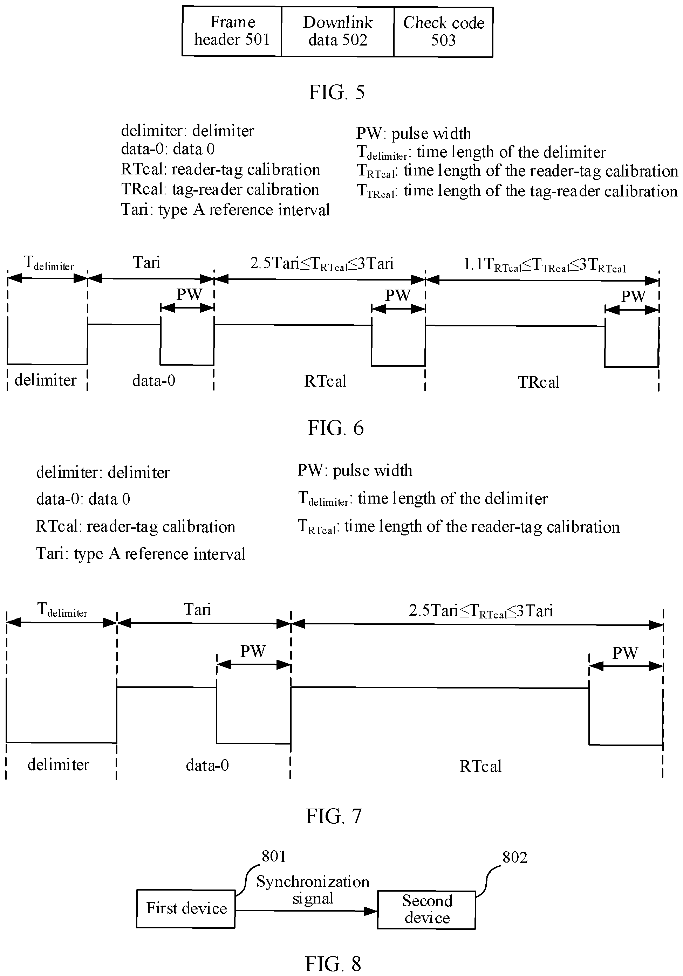

For example, FIG. 5 is a diagram of a frame structure of the downlink signal of the RFID system. The frame structure of the downlink signal of the RFID system may include: a frame header 501, downlink data 502, and a check code 503. The frame header 501 is a synchronization signal, and is used by the tag 202 to complete the detection and synchronization of the downlink signal. The downlink data 502 is used to carry downlink signaling. The check code 503 is used to detect whether an error occurs in a data transmission process. The check code 503 may be a 5-bit cyclic redundancy check (cyclic redundancy check, CRC) code, or a 16-bit CRC code.

Based on different downlink signaling, the frame header 501 may use a preamble or a frame synchronization (Frame-Sync) code. For example, if downlink signaling sent by the reader 201 is a query command, the reader 201 may use the preamble as the frame header. If the reader 201 sends a command other than the query command, the reader 201 may use a frame synchronization code as the frame header.

For example, FIG. 6 is a diagram of a PIE symbol in which the preamble is used as the frame header 501. The PIE symbol of the preamble may include a delimiter (delimiter), data 0, reader-tag calibration (reader-tag calibration, RTcal), and tag-reader calibration (tag-reader calibration, TRcal).

The delimiter indicates a time domain start position of the downlink data 502 of the downlink signal. For example, the delimiter is a continuous low-level signal. A time length $T_{delimiter}$ of the delimiter is 12.5 μs, and tolerance is within a range of 5%. In other words, the value range of the time length $T_{delimiter}$ of the delimiter is [0.95 × 12.5 μs, 1.05×12.5 μs].

The RTcal may be used as a reference for the tag 202 to decode the PIE symbol. A time length $T_{RTcal}$ of the RTcal is a sum of a time length Tari of the data 0 and a time length $T_{data-1}$ of data 1. In other words, a value range of the time length $T_{RTcal}$ of the RTcal is [2.5Tari, 3Tari].

For example, when a time length of the PIE symbol is less than a half of the time length $T_{RTcal}$ of the RTcal, the tag 202 may determine that the PIE symbol is the data 0. When a time length of the PIE symbol is greater than a half of the time length $T_{RTcal}$ of the RTcal, the tag 202 may determine that the PIE symbol is the data 1.

The TRcal is used to calculate, with reference to a DR, an uplink backscatter-link frequency (backscatter-link frequency, BLF) of data sent by the tag 202 to the reader 201. The DR is carried in the downlink data 502 in the query command. A value of the DR may be 8 or 64/3. The tag 202 may calculate the BLF according to Formula (1):

$$BLF = \frac{DR}{T_{TRcal}} \qquad \qquad \text{Formula (1)}$$

$T_{TRcal}$ indicates the time length of TRcal. The value range of $T_{TRcal}$ is [1.1$T_{RTcal}$, 3$T_{RTcal}$].

For example, FIG. 7 is a diagram of a PIE symbol in which the frame synchronization code is used as the frame header 501. The PIE symbol of the frame synchronization code may include a delimiter, data 0, and RTcal. For configuration of the delimiter, the data 0, and the RTcal of the PIE symbol of the frame synchronization code, refer to the delimiter, the data 0, and the RTcal of the PIE symbol of the preamble. Details are not described herein again.

As described above, a low-power communication system such as passive IoT or ambient power-enabled IoT may be a communication system having one of the following technologies: an energy harvesting (energy harvesting) technology, an envelope detection and demodulation technology, or a backscatter (backscatter) modulation technology. The low-power communication system may be an asynchronous communication system. In other words, a transmit-end device is not strictly synchronized with a receive-end device. Therefore, a related organization such as the ISO or the IEC defines a related specification related to a synchronization signal in a downlink signal, so that the receive-end device completes detection and synchronization of the downlink signal.

5. Orthogonal frequency division multiplexing (orthogonal frequency division multiplexing, OFDM):

Currently, 3GPP supports use of an OFDM technology in an uplink transmission solution and a downlink transmission solution of the NR system. The OFDM technology is a multicarrier transmission technology. A principle of the OFDM technology is: dividing a plurality of subchannels in frequency domain, performing serial-to-parallel conversion on to-be-transmitted data to obtain a plurality of groups of data transmitted in parallel, and then modulating each group of data to a subcarrier (subcarrier) of each subchannel for transmission. Therefore, in time domain, transmission of the to-be-transmitted data is performed over a plurality of subcarriers superposed in space, where the plurality of subcarriers are orthogonal to each other. Further, when a signal is received, the plurality of subcarriers may be separated, and then each subcarrier is demodulated, to obtain the to-be-transmitted data.

6. Explanations of terms related to the NR system:

(1) General concept:

Time domain of the NR system is represented by a unit of time $T_c = 1/(\Delta f_{max} \cdot N_f)$. $\Delta f_{max} = 480 \times 10^3$ Hz, and $N_f = 4096$. A constant $\kappa = T_s/T_c = 64$. $T_s = 1/(\Delta f_{ref} \cdot N_{f,ref})$, $\Delta f_{ref} = 15 \times 10^3$ Hz, and $N_{f,ref} = 2048$.

(2) Numerology (numerology):

A transmission numerology supported by the NR system is shown in Table 1. In Table 1, a first column is a subcarrier spacing (subcarrier spacing, SCS) configuration $\mu$, a second column represents a subcarrier spacing, and a third column represents a cyclic prefix (cyclic prefix, CP).

**Table 1**

| $\mu$ | $\Delta f = 2^\mu \cdot 15$ [kHz] | CP |
|---|---|---|
| 0 | 15 | Normal |
| 1 | 30 | Normal |
| 2 | 60 | Normal, and extended |
| 3 | 120 | Normal |
| 4 | 240 | Normal |

Time lengths of a normal CP (normal CP) and an extended CP (extended CP) satisfy $N_{CP,l}^\mu \cdot T_c$, where $N_{CP,l}^\mu$ is shown in Formula (2):

$$N_{CP,l}^\mu = \begin{cases} 512\kappa \cdot 2^{-\mu} & extended\ CP \\ 144\kappa \cdot 2^{-\mu} + 16\kappa & normal\ CP, l = 0\ or\ l = 7 \cdot 2^\mu \\ 144\kappa \cdot 2^{-\mu} & normal\ CP, l \neq 0\ or\ l \neq 7 \cdot 2^\mu \end{cases} \qquad \text{Formula (2)}$$

$l$ is a number of an OFDM symbol in a subframe.

(3) Frame (frame) and subframe (subframe):

Downlink transmission and uplink transmission are formed into a frame with duration of $T_f = (\Delta f_{max} N_f/100) = 10$ ms. Each frame includes 10 subframes with duration of $T_{sf} = (\Delta f_{max} N_f/1000) = 1$ ms. For example, one frame may include a subframe #0 to a subframe #9. A quantity of consecutive OFDM symbols in each subframe is $N_{symb}^{subframe,\mu} = N_{symb}^{slot} N_{slot}^{subframe,\mu}$. Each frame is divided into two half-frames of a same size, that is, a half-frame #0 and a half-frame #1. Each half-frame includes five subframes. For example, the half-frame #0 includes a subframe #0 to a subframe #4, and the half-frame #1 includes a subframe #5 to a subframe #9.

(4) Slot (slot):

For the subcarrier spacing configuration $\mu$, slots are sorted in ascending order $n_s^\mu \in \left\{0, ..., N_{slot}^{subframe,\mu} - 1\right\}$ in a subframe and sorted in ascending order $n_{s,f}^\mu \in \left\{0, ..., N_{slot}^{frame,\mu} - 1\right\}$ in a frame. $N_{symb}^{slot}$ consecutive OFDM symbols exist in one slot, where a value of $N_{symb}^{slot}$ depends on the CP, as shown in Table 2 and Table 3. A start of a slot $n_s^\mu$ in a subframe is aligned with a start of an OFDM symbol $n_s^\mu N_{symb}^{slot}$ in the same subframe in time. For example, when one slot includes 14 OFDM symbols, the OFDM symbols may be sorted as an OFDM symbol #0 to an OFDM symbol #13 based on time.

OFDM symbols in one slot may include three types: a downlink symbol, an uplink symbol, and a flexible symbol. The uplink symbol is used only for uplink transmission. The downlink symbol is used only for downlink transmission. The flexible symbol has no determined transmission direction, and may be used for uplink transmission or downlink transmission based on an indication of control signaling.

**Table 2**

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**Table 3**

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

As described above, in a transmission solution based on the OFDM technology, a key is that, when a signal is received, time domain waveforms of a plurality of subcarriers can be completely separated and do not interfere with each other. However, when the low-power communication system such as the passive IoT or the ambient power-enabled IoT is introduced to the NR system, no orthogonal relationship exists between a time domain waveform of the synchronization signal (frame header 501) used in the low-power communication system and a time domain waveform of a subcarrier used for data transmission in the NR system. If a synchronization signal used in the RFID system is directly used in the NR system, mutual interference exists between the synchronization signal and the subcarrier used for the data transmission in the NR system. This affects communication performance.

In view of this, embodiments of this application provide a synchronization method. When the low-power communication system such as the passive IoT or the ambient power-enabled IoT is introduced to the NR system, the synchronization signal of the low-power communication system such as the passive IoT or the ambient power-enabled IoT can coexist with the subcarrier of the NR system.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and indicates that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one item (piece) of the following" or a similar expression thereof indicates any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of a new service scenario, the technical solutions provided in embodiments of this application are also applicable to similar technical problems.

The technical solutions in embodiments of this application may be applied to the NR system. The technical solutions in embodiments of this application may also be applied to another communication system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), and a worldwide interoperability for microwave access (worldwide interoperability for microwave access, WiMAX) communication system, the wake-up mechanism-based communication system, and the like. The NR system in this application includes a non-standalone (non-standalone, NSA) NR system or a standalone (standalone, SA) NR system. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an IoT communication system, or another communication system.

FIG. 8 is a diagram of an architecture of a communication system according to an embodiment of this application. As shown in FIG. 8, the communication system includes a first device 801 and a second device 802. The first device 801 is a transmit end of a synchronization signal, and the second device 802 is a receive end of the synchronization signal. With reference to the UHF RFID system shown in FIG. 2, the first device 801 may be the reader 201, and the second device 802 may be the tag 202.

With reference to the wake-up mechanism-based system shown in FIG. 3, the first device 801 may be the network device 301, and the second device 802 may be the terminal device 302.

With reference to an NR system, a specific device form of the first device 801 may include an access network device in the NR system and a terminal device in the NR system. A specific device form of the second device 802 may include the terminal device in the NR system. The first device 801 and the second device 802 may perform data transmission by using an OFDM technology. For example, transmission of data sent by the first device 801 to the second device 802 may be performed over an OFDM subcarrier. Alternatively, transmission of data sent by the second device 802 to the first device 801 may be performed over an OFDM subcarrier.

The following uses an example in which the first device 801 interacts with the second device 802 for description.

In a possible implementation, the first device 801 generates a synchronization signal, and sends the synchronization signal to the second device 802. The synchronization signal is generated in an OFDM manner. The synchronization signal may include a first signal and/or a second signal. The first signal is used to determine a time domain start position occupied by the data sent by the first device 801 to the second device 802. The second signal is used to determine a frequency at which the second device 802 sends data to the first device 801. Correspondingly, the second device 802 receives the synchronization signal from the first device 801, and performs time synchronization and/or frequency synchronization based on the synchronization signal.

Specific implementations of the foregoing solutions are described in detail in the following embodiments. Details are not described herein.

In this embodiment of this application, the first device may generate the synchronization signal in the OFDM manner, so that the synchronization signal and an OFDM subcarrier of the data (downlink data for short below) sent by the first device to the second device are orthogonal to each other. Further, when receiving a signal, the second device 802 may completely separate a time domain waveform of the synchronization signal from a time domain waveform of the OFDM subcarrier that carries the downlink data, to avoid interference. Therefore, when a low-power communication system such as passive IoT or ambient power-enabled IoT is introduced to the NR system, according to the synchronization method provided in embodiments of this application, a synchronization signal of the low-power communication system can coexist with a subcarrier of the NR system.

With reference to the NR system, the following further describes an architecture of a communication system to which the synchronization method provided in embodiments of this application may be applied.

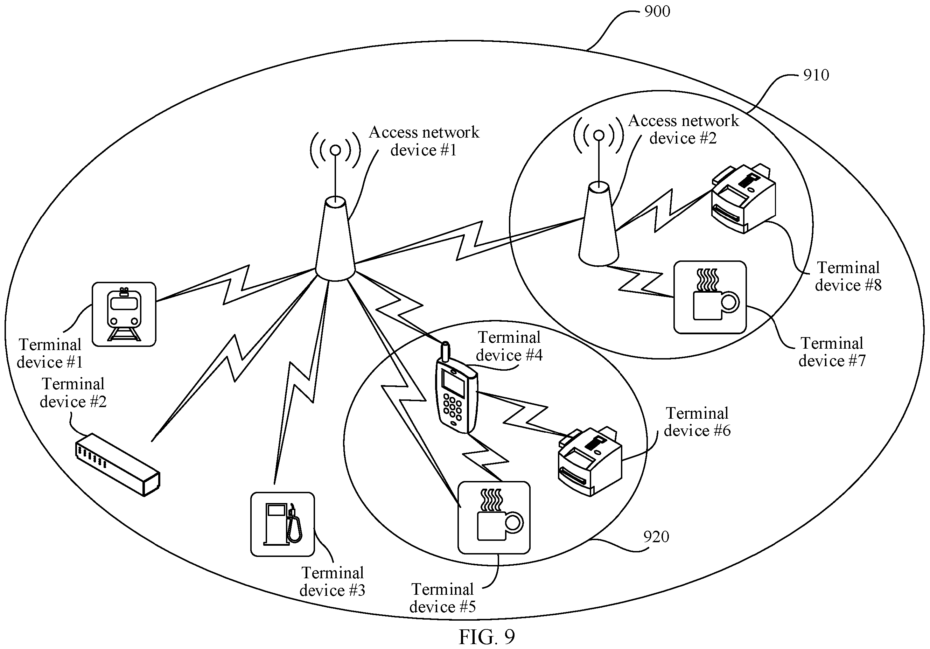

FIG. 9 shows another communication system 900 according to this application. The communication system 900 may include access network devices #1 and #2 and terminal devices #1 to #8. An access network device #1 may directly send data to a terminal device #1 to a terminal device #6. Further, the access network device #1 may be the first device 801, and the terminal device #1 to the terminal device #6 may be the second device 802. The access network device #1 may send data to a terminal device #7 and/or a terminal device #8 by using an access network device #2. Further, the access network device #2 may be the first device 801, and the terminal device #7 or the terminal device #8 may be the second device 802.

In the communication system 900, the access network device #2, the terminal device #7, and the terminal device #8 may form another communication system 910. In the communication system 910, the access network device #2 may directly send data to the terminal device #7 or the terminal device #8. Further, the access network device #2 may be the first device 801, and the terminal device #7 or the terminal device #8 may be the second device 802.

In the communication system 900, a terminal device #4 to the terminal device #6 may form another communication system 920. In the communication system 920, the terminal device #4 may directly send data to a terminal device #5 and/or the terminal device #6. Further, the terminal device #4 may be the first device 801, and the terminal device #5 or the terminal device #6 may be the second device 802.

It should be noted that, in the communication system 900, the first device 801 in an embodiment of this application may be an access network device or a terminal device, and the second device 802 may be a terminal device. For ease of understanding entity forms of the first device 801 and the second device 802 in an embodiment of this application, the following uses an example in which the first device 801 is an access network device and the second device 802 is a terminal device to describe hardware structures of the first device 801 and the second device 802.

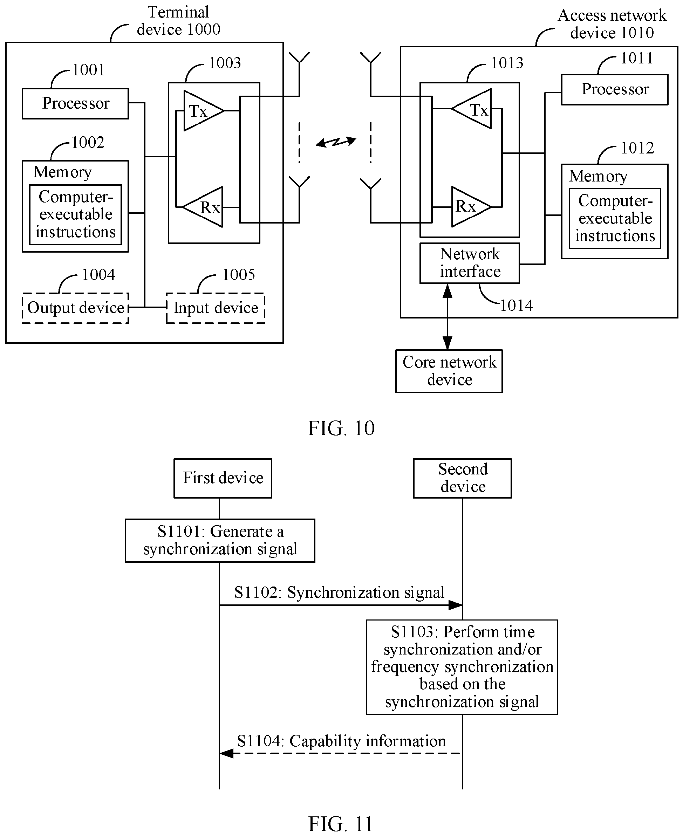

FIG. 10 is a diagram of hardware structures of a terminal device 1000 and an access network device 1010 according to an embodiment of this application.

The terminal device 1000 includes at least one processor 1001 (in FIG. 10, descriptions are provided by using an example in which one processor 1001 is included), at least one memory 1002 (in FIG. 10, descriptions are provided by using an example in which one memory 1002 is included), and at least one transceiver 1003 (in FIG. 10, descriptions are provided by using an example in which one transceiver 1003 is included). Optionally, the terminal device 1000 may further include an output device 1004 and an input device 1005.

The processor 1001, the memory 1002, and the transceiver 1003 are connected through a communication line. The communication line may include a path for transmission of information between the foregoing components.

The processor 1001 may be a general-purpose central processing unit (central processing unit, CPU), a microprocessor, an application-specific integrated circuit (application-specific integrated circuit, ASIC), or one or more integrated circuits configured to control program execution of the solutions in this application. During specific implementation, in an embodiment, the processor 1001 may alternatively include a plurality of CPUs, and the processor 1001 may be a single-CPU (single-CPU) processor or a multi-CPU (multi-CPU) processor. The processor herein may be one or more devices, circuits, or processing cores configured to process data (for example, computer program instructions).

The memory 1002 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium that can carry or store expected program code in a form of instructions or a data structure and that can be accessed by a computer. However, the memory 1002 is not limited thereto. The memory 1002 may exist independently, and is connected to the processor 1001 through the communication line. Alternatively, the memory 1002 and the processor 1001 may be integrated together.

The memory 1002 is configured to store computer-executable instructions for executing the solutions in this application, and the processor 1001 controls execution of the computer-executable instructions. Specifically, the processor 1001 is configured to execute the computer-executable instructions stored in the memory 1002, to implement the synchronization method in embodiments of this application. Optionally, the computer-executable instructions in this embodiment of this application may also be referred to as application program code or computer program code. This is not specifically limited in this embodiment of this application.

The transceiver 1003 may use any apparatus such as a transceiver, and is configured to communicate with another device or a communication network, for example, an Ethernet, a radio access network (radio access network, RAN), or a wireless local area network (wireless local area network, WLAN). The transceiver 1003 includes a transmitter Tx and a receiver Rx.

The output device 1004 communicates with the processor 1001, and may display information in a plurality of manners. For example, the output device 1004 may be a liquid crystal display (liquid crystal display, LCD), a light emitting diode (light emitting diode, LED) display device, a cathode ray tube (cathode ray tube, CRT) display device, a projector (projector), or the like.

The input device 1005 communicates with the processor 1001, and may receive user input in a plurality of manners. For example, the input device 1005 may be a mouse, a keyboard, a touchscreen device, or a sensor device.

The network device 1010 includes at least one processor 1011 (in FIG. 10, descriptions are provided by using an example in which one processor 1011 is included), at least one memory 1012 (in FIG. 10, descriptions are provided by using an example in which one memory 1012 is included), at least one transceiver 1013 (in FIG. 10, descriptions are provided by using an example in which one transceiver 1013 is included), and at least one network interface 1014 (in FIG. 10, descriptions are provided by using an example in which one network interface 1014 is included). The processor 1011, the memory 1012, the transceiver 1013, and the network interface 1014 are connected through a communication line. The network interface 1014 is configured to be connected to a core network device through a link (for example, an S1 interface), or connected to a network interface of another network device through a wired or wireless link (for example, an X2 interface) (not shown in FIG. 10). This is not specifically limited in embodiments of this application. In addition, for related descriptions of the processor 1011, the memory 1012, and the transceiver 1013, refer to descriptions of the processor 1001, the memory 1002, and the transceiver 1003 in the terminal device 1000. Details are not described herein again.

Optionally, the access network device 1010 in this embodiment of this application may be an apparatus for accessing a core network, a chip in an apparatus that may be configured to access a core network, or the like. This is not specifically limited in this embodiment of this application. The apparatus for accessing the core network may be, for example, a base station in a long term evolution LTE system, a base station in a global system for mobile communications (global system for mobile communications, GSM), a base station in a UMTS, a base station in an NR system, a base station in a PLMN, a broadband network gateway (broadband network gateway, BNG), an aggregation switch, or a non-3GPP (non-3GPP) network device. The base station may include base stations in various forms, for example, a macro base station, a micro base station (also referred to as a small cell), a relay station, and an access point. This is not specifically limited in embodiments of this application.

Optionally, the access network device 1010 in this embodiment of this application may support a backscatter communication technology.

Optionally, the access network device 1010 in this embodiment of this application may support sending of a wake-up signal.

Optionally, the access network device 1010 in this embodiment of this application may also be referred to as an access device. This is not specifically limited in this embodiment of this application.

Optionally, the terminal device 1000 in this embodiment of this application may be a device configured to implement a wireless communication function, for example, a terminal or a chip that may be used in a terminal. This is not specifically limited in this embodiment of this application. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in an LTE system, the GSM, the UMTS, the NR system, or a future evolved PLMN. The access terminal may be a cellular phone, a cordless phone, a session start protocol (session initiation protocol, SIP) phone, a wireless local loop (wireless local loop, WLL) station, a personal digital assistant (personal digital assistant, PDA) station, a handheld device with a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal device 1000 may be mobile or fixed.

Optionally, the terminal device 1000 in this embodiment of this application may support the backscatter communication technology.

Optionally, the terminal device 1000 in this embodiment of this application may support receiving of the wake-up signal.

Optionally, the terminal device 1000 in this embodiment of this application may also be referred to as a tag, an MTC terminal, an NR terminal, or the like. This is not specifically limited in this embodiment of this application.

With reference to FIG. 8 to FIG. 10, the following describes in detail a synchronization method according to embodiments of this application.

It should be noted that, in the following embodiments of this application, names of signals or names of parameters in signals of devices are merely examples, and the signals or the parameters may have other names during specific implementation. This is not specifically limited in embodiments of this application.

An example in which the first device 801 interacts with the second device 802 shown in FIG. 8 is used. As shown in FIG. 11, a synchronization method according to an embodiment of this application includes the following steps.

S1101: The first device generates a synchronization signal. The synchronization signal is generated in an OFDM manner. In other words, a time domain waveform of the synchronization signal may be a waveform obtained by superposing a plurality of orthogonal subcarriers. Further, an orthogonal relationship exists between the time domain waveform of the synchronization signal and a time domain waveform of a subcarrier of an NR system.

Optionally, the synchronization signal may be generated in a conventional OFDM (conventional OFDM) manner. For example, the first device may map a sequence of the synchronization signal to a subcarrier, and then perform inverse fast fourier transform (inverse fast fourier transform, IFFT) to generate an OFDM time domain waveform of the synchronization signal.

It should be noted that the synchronization signal may alternatively be generated in a filtered-OFDM (filtered-OFDM, F-OFDM) manner. Alternatively, in this embodiment of this application, the synchronization signal may be generated in another OFDM manner. This is not specifically limited in this embodiment of this application.

It should be noted that in this embodiment of this application, a meaning of "sequence" may be the same as a meaning of "data", where "data" may be represented as a "sequence" including a plurality of "0" or "1" symbols/elements. For example, a sequence [01010101101] may be represented as data to be sent by the first device or the second device. In other words, "sequence" and "data" may be replaced with each other. This is uniformly described herein. Details are not described below again.

Optionally, in this embodiment of this application, the time domain waveform of the synchronization signal is generated in an OFDM manner. Alternatively, the time domain waveform of the synchronization signal is an OFDM waveform.

It may be understood that, because an OFDM technology-based transmission solution is used for a downlink between the first device and the second device, a minimum transmission unit of the synchronization signal or data sent by the first device to the second device is one OFDM symbol. In other words, a time domain resource of the synchronization signal may include one OFDM symbol, or may include a plurality of OFDM symbols. The time domain resource of the synchronization signal may include a time length of the synchronization signal and a time domain position of the synchronization signal. The time domain position of the synchronization signal includes a time domain start position of the synchronization signal and/or a time domain end position of the synchronization signal.

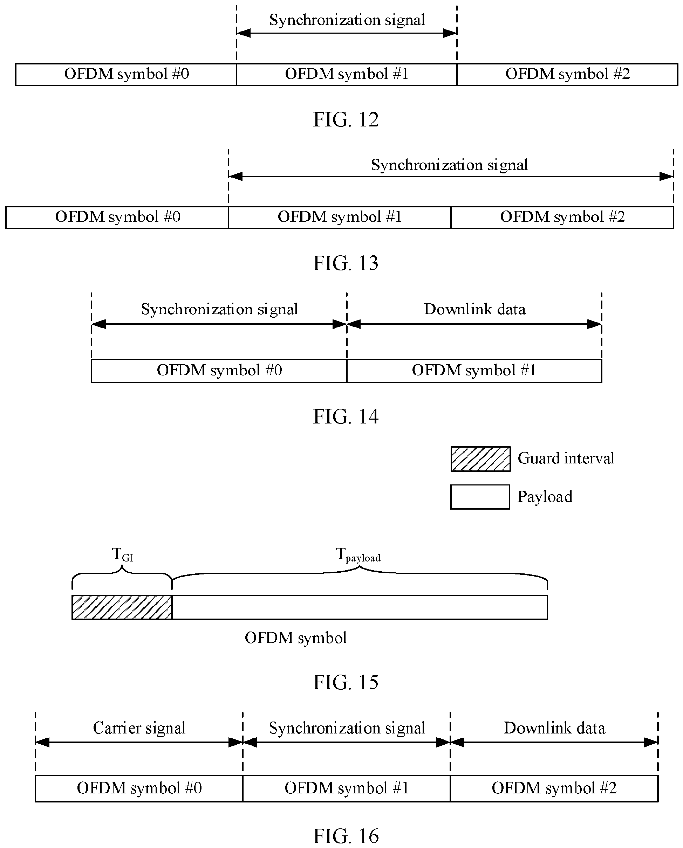

For example, FIG. 12 is a diagram in which the time domain resource of the synchronization signal includes one OFDM symbol. The time domain resource of the synchronization signal includes an OFDM symbol #1 in one subframe. The time domain start position of the synchronization signal is a time domain start position of the OFDM symbol #1 in the subframe, the time domain end position of the synchronization signal is a time domain end position of the OFDM symbol #1 in the subframe, and the time length of the synchronization signal is a time length of the OFDM symbol #1 (that is, one OFDM symbol).

For example, FIG. 13 is a diagram in which the time domain resource of the synchronization signal includes two OFDM symbols in one subframe. The time domain resource of the synchronization signal includes an OFDM symbol #1 and an OFDM symbol #2. The time domain start position of the synchronization signal is a time domain start position of the OFDM symbol #1 in the subframe, the time domain end position of the synchronization signal is a time domain end position of the OFDM symbol #2 in the subframe, and the time length of the synchronization signal is a sum of a time length of the OFDM symbol #1 and a time length of the OFDM symbol #2 (that is, two OFDM symbols).

As described in the related technical description part in specific implementations, in this embodiment of this application, the synchronization signal is located before downlink data sent by the first device, so that the second device determines a time domain start position of the downlink data. For example, FIG. 14 is a diagram of the time domain resource of the synchronization signal according to an embodiment of this application. The synchronization signal may be adjacent to the downlink data. In other words, after receiving the synchronization signal, the second device may determine the time domain start position of the downlink data by using the synchronization signal.

Optionally, in this embodiment of this application, a guard interval (guard interval, GI) may be added before or after an OFDM time domain signal of the synchronization signal. The GI may be a CP.

It should be noted that FIG. 15 is a diagram of a structure of an OFDM symbol according to an embodiment of this application. When the GI is added before or after the OFDM time domain signal, one OFDM symbol includes two parts: a GI and a wanted signal (payload). The wanted signal is an OFDM symbol obtained through IFFT on an OFDM frequency domain signal. In other words, the wanted signal in the OFDM symbol is a part used for transmission of "sequence", "data", or "information".

It may be understood that a time length of the OFDM symbol is a sum of a time length $T_{GI}$ of the GI and a time length $T_{payload}$ of the wanted signal.

It should be noted that "wanted signal" may also be replaced with "data", "sequence", "wanted data", "load", "wanted load", "payload", "valid payload", and the like. This is uniformly described herein. Details are not described below again.

In addition, "transmission" has the same meaning as "carrying". In other words, "transmission" and "carrying" may be replaced with each other. This is uniformly described herein. Details are not described below again.

It may be understood that the time length $T_{payload}$ of the wanted signal is related to a sampling frequency of the IFFT and a quantity of sampling points. In other words, the time length $T_{payload}$ of the wanted signal may be represented by the sampling frequency and the quantity of sampling points. Correspondingly, the time length $T_{GI}$ of the GI may also be represented by the sampling frequency and the quantity of sampling points.

Optionally, in this embodiment of this application, the synchronization signal may include a first signal (which may also be referred to as a delimiter). The first signal is used to determine a time domain start position occupied by the data (downlink data) sent by the first device to the second device. In other words, the time domain start position of the downlink data may be determined by using the first signal in the synchronization signal.

Optionally, in a wake-up mechanism-based communication system, the synchronization signal may include the first signal (which may also be referred to as the delimiter). The first signal is used to determine the time domain start position occupied by the data (downlink data) sent by the first device to the second device. In other words, the second device may determine the time domain start position of the downlink data by using the first signal in the synchronization signal. The downlink data may include a preamble and a wake-up signal. The preamble may be a sequence including "0" and "1". The wake-up signal may indicate an identifier of the second device. Alternatively, the wake-up signal may indicate an identifier of a terminal device group to which the second device belongs. Alternatively, the wake-up signal may indicate a part of an identifier of the second device. Alternatively, the wake-up signal may indicate an identifier of a terminal device group to which the second device belongs.

Optionally, in this embodiment of this application, the first signal may be used to wake up the second device. In other words, after the second device receives the first signal from the first device, a counter of the second device starts to work, and starts to detect a time length of a received signal, to receive and demodulate the downlink data. In other words, before the second device receives the first signal, the counter of the second device does not work, and may not detect the time length of the received signal, to achieve an energy saving effect.

For example, FIG. 16 is a diagram of another time domain resource of the synchronization signal according to an embodiment of this application. Before the synchronization signal, the first device sends a carrier signal. The carrier signal is used to provide energy for the second device, that is, the carrier signal is a high-level signal. Correspondingly, the first signal may be a low-level signal. In other words, when receiving the first signal at the low level after the carrier signal, the second device may determine to start to receive the downlink data.

Optionally, in this embodiment of this application, the synchronization signal may include a second signal (which may also be referred to as a calibration signal). The second signal is used to determine a frequency at which the second device sends data to the first device. For example, the frequency at which the second device sends the data to the first device may be a BLF. Further, the second device may determine the BLF by using Formula (1).

It may be understood that, in this embodiment of this application, a function that may be implemented by the first signal may include a function implemented by a delimiter in a frame header of a preamble part, and a function that may be implemented by the second signal may include a function implemented by TRcal in the frame header of the preamble part.

In a possible implementation, the synchronization signal includes only the first signal. As described above, the time domain resource of the synchronization signal includes one or more OFDM symbols. Therefore, when the synchronization signal includes only the first signal, a time length of the first signal may be a time length of the one or more OFDM symbols.

For example, a scenario in which the synchronization signal includes only the first signal may be: The first device sends downlink signaling other than a query command to the second device. In this case, because the downlink signaling other than the query command does not include a DR, the second device does not need to calculate the BLF. Further, the synchronization signal may include only the first signal. Alternatively, when the second device has determined the BLF, the synchronization signal may include only the first signal.

Alternatively, in another possible implementation, the synchronization signal includes the first signal and padding data. In other words, when the time length of the first signal is less than a time length of one OFDM symbol, or when the time length of the first signal is less than the time length of the synchronization signal, the time length of the synchronization signal may be the time length of the one or more OFDM symbols by padding data. The padding data may be invalid data or unwanted data.

Alternatively, in another possible implementation, the synchronization signal includes the first signal and the second signal. In other words, the second device may determine the time domain start position of the downlink data and the BLF based on the synchronization signal.

For example, a scenario in which the synchronization signal includes the first signal and the second signal may be: Downlink signaling sent by the first device is a query command, where the query command carries a DR. In this case, the second device may determine the time domain start position of the downlink data based on the first signal, and then may obtain the second signal and the DR in the query command. Further, the second device may obtain the BLF through calculation based on a time length of the second signal, the DR, and Formula (1).

S1102: The first device sends the synchronization signal to the second device. Correspondingly, the second device receives the synchronization signal from the first device.

S1103: The second device performs time synchronization and/or frequency synchronization based on the synchronization signal.

In other words, the second device may determine, based on the first signal in the synchronization signal, the time domain start position occupied by the downlink data, and determine the BLF based on the second signal in the synchronization signal.

In this embodiment of this application, the synchronization signal is generated in the OFDM manner, so that the synchronization signal and an OFDM subcarrier used for transmission of the downlink data are orthogonal to each other. Therefore, when demodulating a signal, the second device may completely separate the time domain waveform of the synchronization signal from a time domain waveform of the OFDM subcarrier used for the transmission of the downlink data, to avoid interference. Therefore, when a low-power communication system such as passive IoT or ambient power-enabled IoT is introduced to the NR system, a synchronization signal of the low-power communication system can coexist with a subcarrier of the NR system.

In this embodiment of this application, when the first device is an access network device, actions of the first device in the foregoing steps S1101 to S1103 may be instructed to be performed by the access network device by invoking, by the processor 1011 in the access network device 1010 shown in FIG. 10, the application program code stored in the memory 1012; or when the first device is a terminal device, actions of the first device in the foregoing steps S1101 to S1103 may be instructed to be performed by the terminal device by invoking, by the processor 1001 in the terminal device 1000 shown in FIG. 10, the application program code stored in the memory 1002. This is not limited in this embodiment.

In this embodiment of this application, when the second device is a terminal device, actions of the second device in the foregoing steps S1101 to S1103 may be instructed to be performed by the terminal device by invoking, by the processor 1001 in the terminal device 1000 shown in FIG. 10, the application program code stored in the memory 1002. This is not limited in this embodiment.

Optionally, in this embodiment of this application, the second signal is located after the first signal. In other words, after the second device detects the first signal, the second device may detect the second signal, obtain the time length of the second signal, and further calculate the BLF with reference to the DR carried in the downlink data.

Optionally, in a possible implementation, the first signal and the second signal are located in different OFDM symbols.

Optionally, a time interval between an OFDM symbol occupied by the first signal and an OFDM symbol occupied by the second signal is predefined. In other words, after detecting the first signal, the second device may determine the OFDM symbol occupied by the second signal.

It should be noted that the time interval between the OFDM symbol occupied by the first signal and the OFDM symbol occupied by the second signal may be negotiated by the first device and the second device in advance; the time interval between the OFDM symbol occupied by the first signal and the OFDM symbol occupied by the second signal is preconfigured on the second device; or the time interval between the OFDM symbol occupied by the first signal and the OFDM symbol occupied by the second signal is agreed in a protocol. This is not specifically limited in this embodiment of this application.

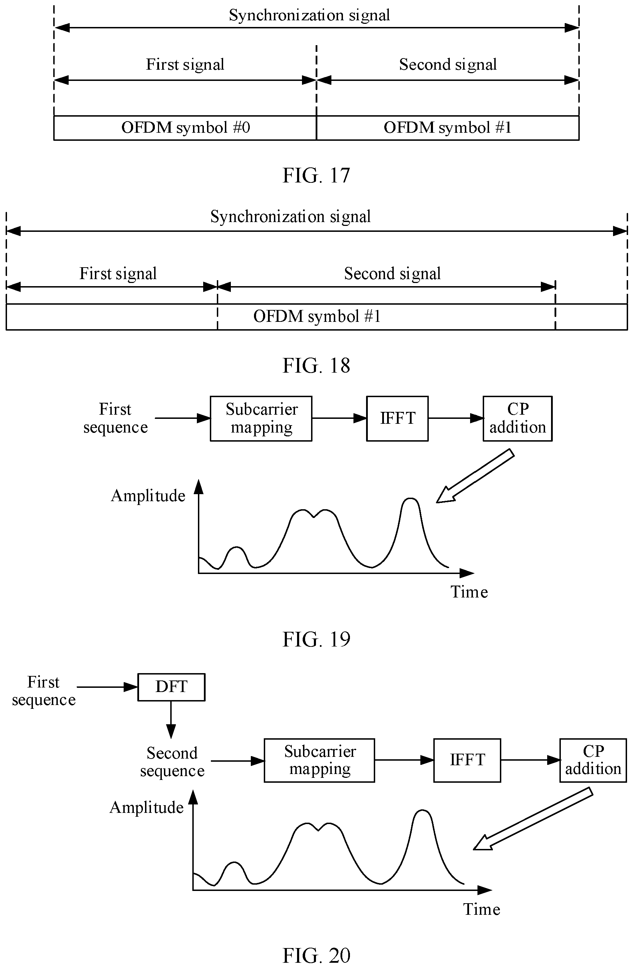

For example, the time interval between the OFDM symbol occupied by the first signal and the OFDM symbol occupied by the second signal is 0. As shown in FIG. 17, the first signal and the second signal are located in two adjacent OFDM symbols. In other words, after detecting the first signal, the second device may determine that an OFDM symbol after the first signal carries the second signal.

For example, the time interval between the OFDM symbol occupied by the first signal and the OFDM symbol occupied by the second signal is T OFDM symbols, where T is a positive integer, and the OFDM symbol occupied by the first signal and the OFDM symbol occupied by the second signal are separated by the T OFDM symbols. In other words, after detecting the first signal, the second device may start to receive the second signal after the T OFDM symbols.

Optionally, in another possible implementation, the first signal and the second signal are located in a same OFDM symbol. In other words, after detecting the first signal, the second device may determine to start to receive the second signal.

For example, FIG. 18 shows an example of a diagram of a structure of the synchronization signal whose first signal and second signal are located in a same OFDM symbol. The second signal may be adjacent to the first signal. A sum of the time length of the second signal and the time length of the first signal may be a time length of one OFDM symbol, or a sum of the time length of the second signal and the time length of the first signal may be less than a time length of one OFDM symbol. This is not specifically limited in this embodiment of this application.

It should be noted that the synchronization signal may further include other symbols, for example, data 0 and RTcal in a preamble part.

Optionally, in this embodiment of this application, a time interval between the first signal and the second signal is predefined. In other words, after detecting the first signal, the second device may determine a time domain start position of the second signal.

It should be noted that the time interval between the first signal and the second signal may be negotiated by the first device and the second device in advance; or the time interval between the first signal and the second signal is preconfigured on the second device; or the time interval between the first signal and the second signal is agreed in a protocol. This is not specifically limited in this embodiment of this application.

The following describes step S1101 in detail in two manners of generating the time domain waveform of the synchronization signal.

Manner 1: The waveform of the synchronization signal may be a cyclic prefix-orthogonal frequency division multiplexing (conventional OFDM using a Cyclic Prefix, CP-OFDM) waveform. In other words, an OFDM symbol occupied by the synchronization signal includes two parts: a CP and a wanted signal. Further, a time length of one OFDM symbol is a sum of a time length $T_{CP}$ of the CP and a time length $T_{payload}$ of the wanted signal.

As described in the preamble part, the time length $T_{CP}$ of the CP satisfies $N_{CP,l}^{\mu} \cdot T_c$, where $N_{CP,l}^{\mu}$ may be obtained by using Formula (2). Correspondingly, the time length $T_{payload}$ of the wanted signal may also be represented by a constant $\kappa$, a subcarrier spacing configuration $\mu$, and a unit of time $T_c$, as shown in Formula (3):

$$Z = 2048\kappa \cdot 2^{-\mu} \cdot T_c \qquad\qquad \text{Formula (3)}$$

Z may represent the time length $T_{payload}$ of the wanted signal.

For example, with reference to the communication system 900 shown in FIG. 9, a scenario in which the waveform of the synchronization signal sent by the first device is the CP-OFDM waveform is described. In the communication system 900, the access network device #1 may directly send data to the terminal device #1 to the terminal device #6. Therefore, the access network device #1 may be the first device, and the terminal device #1 to the terminal device #6 may be the second device. In this case, the synchronization signal sent by the first device is a signal transmitted over a downlink in the NR system, and a waveform of the transmission over the downlink in the NR system is a CP-OFDM waveform. Further, the waveform of the synchronization signal may be a cyclic prefix-orthogonal frequency division multiplexing waveform (The downlink transmission waveform is conventional OFDM using a Cyclic Prefix).

Optionally, in a possible implementation, the waveform of the synchronization signal is generated in a CP-OFDM manner based on a first sequence. The first sequence may be a predefined sequence.

Optionally, the first sequence may include a plurality of elements.

Each element may be represented by a binary symbol "0" or "1".

Alternatively, each element may be a complex number, and may be represented by a+bj, where $j^2=-1$, and a and b are real numbers.

For example, the first sequence may include k constellation points. The constellation points may be ASK constellation points, phase-shift keying (phase-shift keying, PSK) constellation points, and quadrature amplitude modulation (quadrature amplitude modulation, QAM) constellation points. Modulation orders of ASK, PSK, and QAM are not specifically limited in this embodiment of this application.

It should be noted that the first sequence may be stored in or configured on the first device in advance; or the first sequence is agreed in a protocol. This is not specifically limited in this embodiment of this application.

For example, FIG. 19 is a diagram of a module framework of a waveform generation manner of the synchronization signal according to an embodiment of this application. For the synchronization signal, subcarrier mapping may be performed on the first sequence to map the first sequence to a subcarrier, then IFFT is performed, and a CP is added, to generate the waveform of the synchronization signal. The CP may be added before the wanted signal.

Manner 2: The waveform of the synchronization signal is a CP-OFDM waveform, and is generated in a (discrete fourier transform, DFT) transform precoding manner. In other words, in comparison with Manner 1, a DFT operation is added in Manner 2 to implement transformation from time domain to frequency domain. Further, the synchronization signal sent by the first device is a time domain signal, so that a problem of a high peak to average power ratio (peak to average power ratio, PAPR) caused by sending a frequency domain OFDM signal can be avoided.

Optionally, in this embodiment of this application, the waveform of the synchronization signal is the CP-OFDM waveform, and is generated in a transform precoding manner of DFT spreading. Alternatively, the waveform of the synchronization signal is the CP-OFDM waveform, and the waveform of the synchronization signal has a transform precoding function for performing DFT extending.

It should be noted that "spreading" has the same meaning as "extending". In other words, "spreading" and "extending" may be replaced with each other. This is uniformly described herein. Details are not described below again.

In addition, the OFDM manner corresponding to Manner 2 may also be referred to as discrete fourier transform-spread orthogonal frequency division multiplexing (discrete fourier transform-spread OFDM, DFT-S-OFDM).

For example, with reference to the communication system 920 shown in FIG. 9, a scenario in which the waveform of the synchronization signal is a DFT-S-OFDM waveform is described. In the communication system 920, the terminal device #4 may directly send data to the terminal device #5 and/or the terminal device #6. Therefore, the terminal device #4 may be the first device, and the terminal device #5 or the terminal device #6 may be the second device. A communication link used by the terminal device to send the data may be an uplink in the NR system. Therefore, the waveform of the synchronization signal sent by the first device may be a waveform of uplink transmission in the NR system, and the waveform of uplink transmission in the NR system is a DFT-S-OFDM waveform. Further, the DFT-S-OFDM waveform (The downlink transmission waveform is conventional OFDM using a CP with a transform precoding function performing DFT spreading) is used as the waveform of the synchronization signal.

Optionally, in this embodiment of this application, that the waveform of the synchronization signal is generated in the DFT transform precoding manner includes: The waveform of the synchronization signal is a waveform obtained through CP-OFDM on a second sequence. The second sequence is a sequence obtained through DFT spreading transform precoding on the first sequence.

For example, FIG. 20 is a diagram of a module framework of another waveform generation manner of the synchronization signal according to an embodiment of this application. For the synchronization signal, DFT may be performed on the first sequence to obtain the second sequence, subcarrier mapping is performed on the second sequence, then IFFT is performed, and a CP is added, to generate the waveform of the synchronization signal.

The following further describes a time domain position and the time length that are of the first signal.

Optionally, in this embodiment of this application, a time domain resource of the first signal includes first K time units in N time units corresponding to a wanted signal in one OFDM symbol, and K is a positive integer. In other words, the time domain resource of the first signal includes a start part of the wanted signal in the OFDM symbol, so that the second device may first detect the first signal before the second signal and the downlink data, to subsequently receive the downlink data or the second signal. In addition, when K is less than N, the first signal occupies only some time domain resources of the OFDM symbol. Therefore, an idle time domain resource of the OFDM symbol may be used for transmission of other content, such as the second signal, the data 0, or the RTcal, so that utilization of time domain resources of the OFDM symbol can be improved.

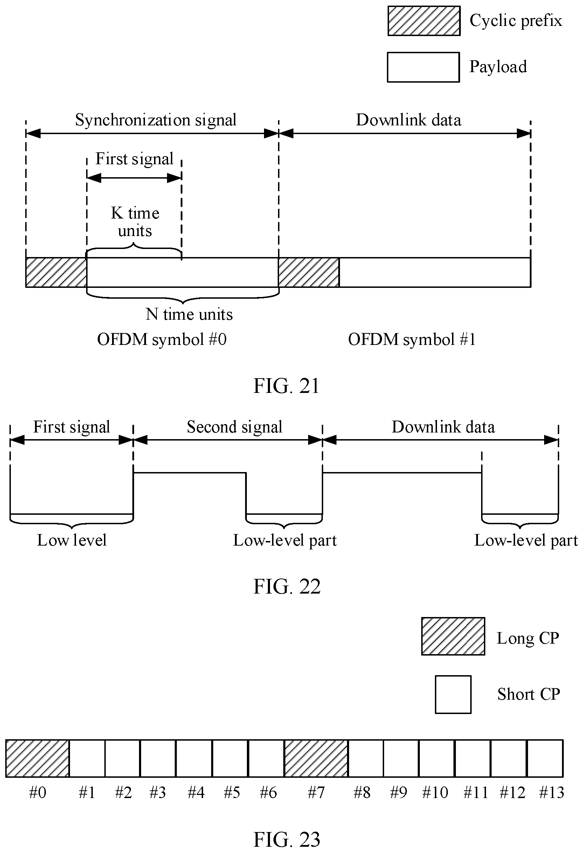

For example, FIG. 21 is a diagram of the time domain resource of the first signal according to an embodiment of this application. The time length of the wanted signal is the N time units, and the time domain resource of the first signal includes the first K time units in the N time units. In other words, a time domain end position of the first signal is a $K^{th}$ time unit in the N time units, and the time length of the first signal is greater than or equal to the K time units. K may be equal to N.

Optionally, in this embodiment of this application, the time domain resource of the first signal may include a time domain unit corresponding to a positive integer quantity of OFDM symbols. The positive integer quantity of OFDM symbols are used to carry the first signal. The time domain unit corresponding to the OFDM symbols may be a time length of one OFDM symbol.

Optionally, in this embodiment of this application, the time unit may be a constant $\kappa$, a unit of time $T_c$, a unit of time $T_s$, a preset sampling point of the IFFT, a preset sampling frequency of the IFFT, a subcarrier spacing, or the like.

It should be noted that a meaning of the "preset sampling point in the IFFT" is the same as that of the "sampling point in the IFFT". In other words, the "preset sampling point in the IFFT" and the "sampling point in the IFFT" may be replaced with each other for description. This is uniformly described herein. Details are not described below again.

The following further describes the time length of the first signal with reference to the time domain waveform of the signal.

Optionally, in this embodiment of this application, before receiving the first signal from the first device, the second device may detect the time length of the received signal. In other words, the second device may determine, by detecting the time length of the received signal and comparing the time length of the received signal with the time length of the first signal, whether the received signal is the first signal.

Optionally, in this embodiment of this application, the first signal is a low-level signal. In other words, when detecting a low-level signal whose time length is greater than or equal to the time length of the first signal, the second device may determine that the first signal is detected.

Optionally, in this embodiment of this application, an amplitude of a time domain waveform corresponding to the first signal is less than a third threshold. Alternatively, an absolute value of an amplitude of a time domain waveform corresponding to the first signal is less than a fourth threshold. Alternatively, a maximum value of an amplitude of a time domain waveform corresponding to the first signal is less than a fifth threshold.

Optionally, an average value of amplitudes of a time domain waveform corresponding to the first signal is less than a sixth threshold.

Correspondingly, after receiving the signal, the second device may calculate an average value of amplitudes of a time domain waveform of the received signal. In other words, if the average value is less than the sixth threshold, the second device determines that the received signal is the first signal.

It should be noted that the third threshold to the sixth threshold may be predefined. The third threshold to the sixth threshold may be equal or unequal. The third threshold and the fifth threshold are used as an example. The third threshold may be less than the fifth threshold, the third threshold is equal to the fifth threshold, or the third threshold is greater than the fifth threshold.

In addition, values of the third threshold to the sixth threshold are not specifically limited in this embodiment of this application.

For example, a scenario in which the first signal is at a low level may be, for example, a scenario shown in FIG. 16 in which the first device provides energy for the second device by using a carrier signal. It may be understood that, because the carrier signal supplies energy to the second device, the carrier signal is a high-level signal. In this way, when the second device receives the first signal at the low level, the second device may determine to start to receive the downlink data.

Optionally, in a possible implementation, the time domain resource of the first signal further includes a part of time units corresponding to a CP in the OFDM symbol in which the first signal is located. A level of a signal of the CP is the same as a level of the first signal. In other words, when the first signal is at the low level, the part of time units corresponding to the CP are added to the time domain resource of the first signal, so that duration of the low-level signal is long enough. Further, the first signal may be distinguished from a low-level part of the second signal and/or a low-level part of the downlink data. In this way, when receiving the signal, the second device may determine that a low-level signal with a longest time length in the received signal is the first signal.

For example, a diagram of a structure of a downlink signal shown in FIG. 22 is used to describe the following: The second device determines that the first signal is detected. The time length of the first signal is greater than a time length of the low-level part of the downlink data, and is greater than a time length of the low-level part of the second signal. Further, when receiving the downlink signal, the second device may determine that the low-level signal with the longest time length is the first signal.

Correspondingly, corresponding to a case in which the synchronization signal is generated in the DFT manner in Manner 2, a quantity of consecutive 0 symbols (low level) in a third sequence that is used to generate the second signal and that is in the first sequence is less than a quantity of consecutive 0 symbols (low level) in a fourth sequence that is used to generate the first signal and that is in the first sequence.

For example, the first sequence is [000111100110]. First three elements in the first sequence are the fourth sequence [000], and the third sequence may be a part [111100110] obtained by removing [000] from the first sequence. Further, the quantity (2) of consecutive 0 symbols in the third sequence is less than the quantity (3) of consecutive 0 symbols in the fourth sequence. Optionally, a CP of one OFDM symbol may be obtained by copying a signal carried in last S1 time units in N time units corresponding to a wanted signal in the OFDM symbol. A time length of the last S1 time units is equal to a time length of the CP of the OFDM symbol.

Optionally, in this embodiment of this application, a signal carried in last S time units in the N time units corresponding to the wanted signal in the OFDM symbol in which the first signal is located is a low-level signal. A time length of the last S time units is greater than or equal to the time length of the CP of the OFDM symbol in which the first signal is located. In other words, the signal carried in the last S time units corresponding to the wanted signal in the OFDM symbol in which the first signal is located is the low-level signal, so that it can be ensured that a level of a signal of the CP is a low level. In this way, duration of a low-level part of the first signal may be increased.

Optionally, in this embodiment of this application, a last element of the first sequence is 0. In other words, the first sequence ends with 0. For example, the first sequence is [000111100110], and the last element of the sequence is 0.

Optionally, an amplitude of a time domain waveform of the signal carried in the last S time units in the N time units corresponding to the wanted signal in the OFDM symbol in which the first signal is located is less than the third threshold.

Optionally, an absolute value of an amplitude of a time domain waveform of the signal carried in the last S time units in the N time units corresponding to the wanted signal in the OFDM symbol in which the first signal is located is less than the fourth threshold.

Optionally, a maximum value of an amplitude of a time domain waveform of the signal carried in the last S time units in the N time units corresponding to the wanted signal in the OFDM symbol in which the first signal is located is less than the fifth threshold.

Optionally, an average value of amplitudes of a time domain waveform of the signal carried in the last S time units in the N time units corresponding to the wanted signal in the OFDM symbol in which the first signal is located is less than the sixth threshold.

Optionally, in a possible implementation, the third threshold to the sixth threshold may be less than or equal to an average value of amplitudes of the wanted signal in the OFDM symbol in which the first signal is located.

Optionally, in an embodiment in which the waveform of the synchronization signal is generated based on the first sequence in the CP-OFDM manner, the first sequence includes Q elements, and last P elements in the Q elements are a first symbol indicating a low level.

For example, when each element of the first sequence is represented by using a symbol 0 or 1, the first symbol may be a symbol 0.

The following further describes the time length of the first signal from the perspective of detecting the first signal by the second device.

Optionally, in this embodiment of this application, the time length of the first signal is predefined. In other words, for the second device, the time length of the first signal is known. If the second device detects a low-level signal within the known time length, the second device may determine that the first signal is detected. In this way, efficiency of detecting the first signal by the second device can be improved and/or complexity of detecting the first signal by the second device can be reduced.

It should be noted that the time length of the first signal may be stored in or configured on the second device in advance; or the time length of the first signal is agreed in a protocol. This is not specifically limited in this embodiment of this application.

Optionally, the time length of the first signal may change with a time domain resource on which the first signal is located. In other words, the time length of the first signal may change with a time domain resource for sending the first signal.

For ease of understanding, a change status of the time length of the first signal with the time domain resource is described from two aspects: a subcarrier spacing and a CP type.

As shown in Formula (3), a value of the time length $T_{payload}$ of the wanted signal is Z, and the value of $T_{payload}$ is further equal to the foregoing N time units, where Z is represented by the constant $\kappa$ and the subcarrier spacing configuration $\mu$. In other words, when subcarrier spacing configurations are different, values of Z are different. Therefore, a value of the time unit changes with different subcarrier spacing configurations. Further, a time length of the K time units also changes with different subcarrier spacing configurations. In other words, when subcarrier spacing configurations are different, time lengths (including the K time units) of the first signal are different. A larger value of the subcarrier spacing configuration indicates a smaller value of the time unit, and further indicates a shorter time length of the K time units in the first signal.

It should be noted that when the time domain resource of the first signal includes the CP of the OFDM symbol in which the first signal is located, time lengths of the first signal may be different even if subcarrier spacing configurations are the same. An example is as follows: As described in the preamble part, CP types may be different when subcarrier spacing configurations are the same. For example, when the subcarrier spacing configuration $\mu$ is 2, the subcarrier spacing $\Delta f$ is 60 kHz, and the CP is a normal CP or an extended CP. It may be determined, through signaling configuration, that the normal CP or the extended CP is used when $\mu$ is 2. A time length corresponding to the normal CP is different from a time length corresponding to the extended CP.

Further, time lengths of CPs corresponding to different OFDM symbols may be different. FIG. 23 is a diagram of a time length of each OFDM symbol in one slot in the NR system according to an embodiment of this application. As described in Formula (2), for the normal CP, a time length of a CP of an OFDM symbol #0 and a time length of a CP of an OFDM symbol #7 are greater than a time length of a CP of an OFDM symbol with another number.

In other words, in a case in which the time domain resource of the first signal includes the CP of the OFDM symbol in which the first signal is located, even if a same subcarrier configuration is used, the time length of the first signal changes with different CP types. In other words, the time length of the first signal changes with a position of the OFDM symbol.

For ease of description, in this embodiment of this application, for the normal CP, the CP of the OFDM symbol #0 and the CP of the OFDM symbol #7 are represented as "long CP (long CP)", and the CP of the OFDM symbol with the another number is represented as "short CP (short CP)".

Optionally, in this embodiment of this application, the time length of the CP of the OFDM symbol in which the first signal is located is fixed. In other words, when a same subcarrier spacing configuration is used, the second device does not need to blindly detect first signals of different time lengths when receiving the first signal. This can improve the efficiency of detecting the first signal by the second device and/or reduce the complexity of detecting the first signal by the second device.

Optionally, in a possible implementation, the OFDM symbol in which the first signal is located is an OFDM symbol that includes a short CP in the normal CP. In other words, the time length of the CP of the OFDM symbol in which the first signal is located is $144\kappa \cdot 2^{-\mu} \cdot T_c$ in Formula (2). Further, when the same subcarrier spacing configuration is used, the time length of the first signal is a fixed value.

Optionally, a number of the OFDM symbol in which the first signal is located satisfies $l \neq 0$ or $l \neq 7 \cdot 2^{\mu}$. In other words, the time length of the CP of the OFDM symbol in which the first signal is located is $144\kappa \cdot 2^{-\mu} \cdot T_c$ in Formula (2).

Optionally, in another possible implementation, the OFDM symbol in which the first signal is located is an OFDM symbol that includes a long CP in the normal CP. In other words, the time length of the CP of the OFDM symbol in which the first signal is located is $(144x \cdot 2^{-\mu} + 16x) \cdot T_c$ in Formula (2). Further, when the same subcarrier spacing configuration is used, the time length of the first signal is a fixed value.

Optionally, a number of the OFDM symbol in which the first signal is located satisfies $l = 0$ or $l = 7 \cdot 2^{\mu}$. In other words, the time length of the CP of the OFDM symbol in which the first signal is located is $(144x \cdot 2^{-\mu} + 16\kappa) \cdot T_c$ in Formula (2).

Optionally, in another possible implementation, the OFDM symbol in which the first signal is located is an OFDM symbol that includes an extended CP. In other words, the time length of the CP of the OFDM symbol in which the first signal is located is $512\kappa \cdot 2^{-\mu} \cdot T_c$ in Formula (2). Further, when the same subcarrier spacing configuration is used, the time length of the first signal is a fixed value.

Optionally, in this embodiment of this application, a subcarrier spacing of the first signal is 60 kHz. Alternatively, the subcarrier spacing configuration $\mu$ of the first signal is 2. In other words, the time length of the CP of the OFDM symbol in which the first signal is located is $512\kappa \cdot 2^{-\mu} \cdot T_c$ in Formula (2).

The following further describes the time length of the first signal from the perspective of utilization of the time domain resource for sending the first signal by the first device.

Optionally, in this embodiment of this application, the time length of the first signal is greater than or equal to the first threshold and less than or equal to a second threshold. The first threshold is greater than or equal to $T_{LCP}+t\cdot Z$, $T_{LCP}$ is a time length of the long CP, Z is the time length $T_{payload}$ of the wanted signal, t is a coefficient, the second threshold is less than or equal to $T_{SCP}+t\cdot Z$, and $T_{SCP}$ is a time length of the short CP. In other words, the time length of the first signal may change within a small range. Further, the first device may send the first signal at any time domain position. In other words, the first device does not need to send the first signal on a specific time domain resource, so that time domain resource utilization can be improved.

It should be noted that a value of t may be 1, 1/2, 1/4, 1/5, or the like. This is not specifically limited in this embodiment of this application.

For ease of understanding, the first threshold and the second threshold are described with reference to an NR system parameter in the preamble part.

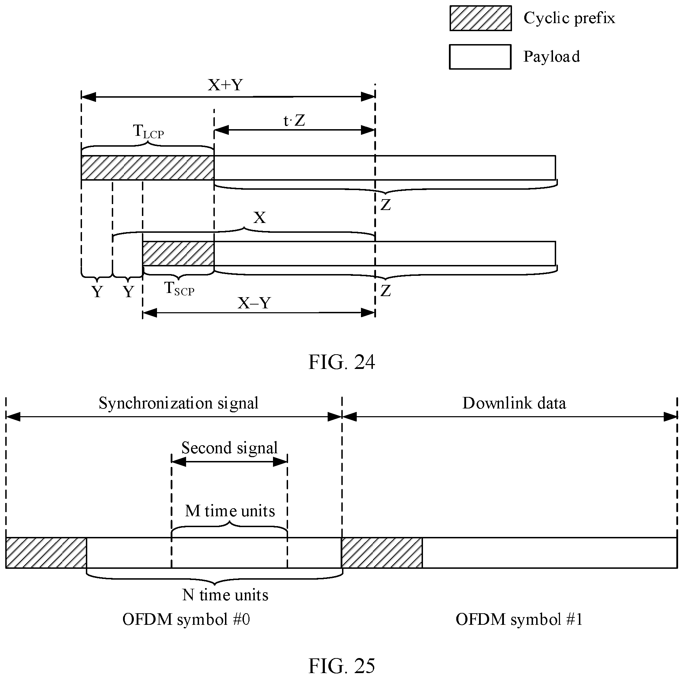

FIG. 24 is a diagram of value ranges of the first threshold and the second threshold according to an embodiment of this application. The first threshold is X+Y, the second threshold is X-Y, $X=t\cdot Z+(T_{LCP}+T_{SCP})/2$, and $Y\geq(T_{LCP}-T_{SCP})/2$. It may be understood that, in this embodiment of this application, $Z = 2048K \cdot 2^{-\mu} \cdot T_c$, $T_{LCP} = (144x \cdot 2^{-\mu} + 16x) \cdot T_c$, and $T_{SCP} = 144\kappa \cdot 2^{-\mu} \cdot T_c$. These parameters are substituted into X and Y, and $X = (2048\kappa \cdot 2^{-\mu} + 144\kappa \cdot 2^{-\mu} + 8\kappa) \cdot T_c = (2192K \cdot 2^{-\mu} +$

$8\kappa) \cdot T_c$ and $Y \geq 8\kappa \cdot T_c$ may be obtained.

Optionally, in this embodiment of this application, when the second device detects a low-level signal within a time range [X-Y, X+Y], the second device determines that the first signal is detected.

The following further describes a time domain resource of the second signal in this embodiment of this application with reference to the OFDM manner of generating the synchronization signal.

Optionally, in this embodiment of this application, the time domain resource of the second signal includes M of the N time units corresponding to the wanted signal in the OFDM symbol, and M is a positive integer. The IFFT is needed in a process of generating an OFDM symbol, and an integer is obtained through IFFT sampling. If M in the M time units included in the time domain resource of the second signal is not a positive integer, after the IFFT is performed, a part that is not an integer is quantized into an integer. In this case, an error is introduced. In other words, in a process of generating the second signal through OFDM, M is a positive integer, so that an error introduced through quantization at an IFFT preset sampling rate can be reduced.

For example, FIG. 25 is a diagram of the time domain resource of the second signal according to an embodiment of this application. The time length of the wanted signal is the N time units, and the time domain resource of the second signal includes M of the N time units.

It should be noted that the M time units are M consecutive time units.

Optionally, in this embodiment of this application, the time unit may be a constant $\kappa$, a unit of time $T_c$, a unit of time $T_s$, a preset sampling point of the IFFT, a preset sampling frequency of the IFFT, a subcarrier spacing, or the like.

Optionally, in this embodiment of this application, the synchronization signal includes the second signal. The waveform of the synchronization signal is generated in the CP-OFDM manner by performing the DFT transform precoding on the first sequence. The first sequence includes the third sequence. The third sequence is a sequence used to generate the second signal.

M satisfies a first condition, and the first condition includes:

N is L times of M, and a quantity of elements included in the first sequence is L times of a quantity of elements included in the third sequence, where N is a power of 2, and L is a positive integer.

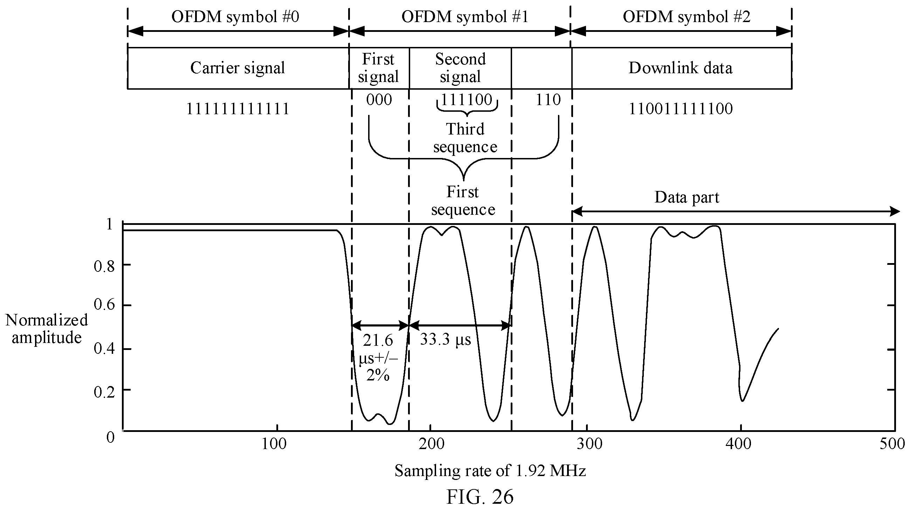

The following describes the time domain resource of the second signal with reference to a diagram of a time domain resource of a downlink signal shown in FIG. 26.

For example, FIG. 26 is the diagram of the time domain resource of the downlink signal according to an embodiment of this application. The downlink signal includes a carrier signal, a synchronization signal, and downlink data. The carrier signal is sent in an OFDM symbol #0 before the synchronization signal, the carrier signal is used to provide energy for the second device, and the carrier signal is at a high level. An OFDM symbol #1 after the carrier signal carries the synchronization signal, and an OFDM symbol #2 after the synchronization signal carries the downlink data.

The synchronization signal includes the first signal and the second signal, a subcarrier spacing of the synchronization signal is 15 kHz, and the time length of the first signal is 21.6 $\mu$s+/- 2%, that is, a tolerance range is 2%. In other words, CP lengths of different OFDM symbols are considered, and the synchronization signal may be sent in any OFDM symbol. Further, a time domain resource configuration of the synchronization signal is flexible and has high utilization.

When the sampling rate is 1.92 MHz, a quantity of sampling points of one OFDM symbol is 128, that is, a wanted signal in one OFDM symbol corresponds to 128 time units. Correspondingly, corresponding to the case in which the synchronization signal is generated in the DFT manner in Manner 2, the first sequence may be [000111100110], and the quantity of elements in the first sequence is 12. The second signal corresponds to [111100] in the first sequence, that is, the third sequence, and the quantity of elements in the third sequence is 6. Further, the quantity of elements in the first sequence is twice the quantity of elements in the third sequence, that is, L=2. Based on the first condition, M=128/2=64. In this way, a quantity M of sampling points of the second signal in time domain is an integer, and the length of the second signal is 33.3 $\mu$s.

It should be noted that in this embodiment of this application, the "time unit" and the "quantity of sampling points" obtained through OFDM may be replaced with each other for description. This is uniformly described herein. Details are not described below again.

The following further describes the time length of the second signal with reference to a manner in which the second device measures a time length of a signal.

Optionally, in a possible implementation, the second device measures the time length of the second signal by using the counter.

It should be noted that because a signal boundary is not strictly aligned with a clock boundary, a count error range of the counter is +/-1 clock cycle (clock cycle).

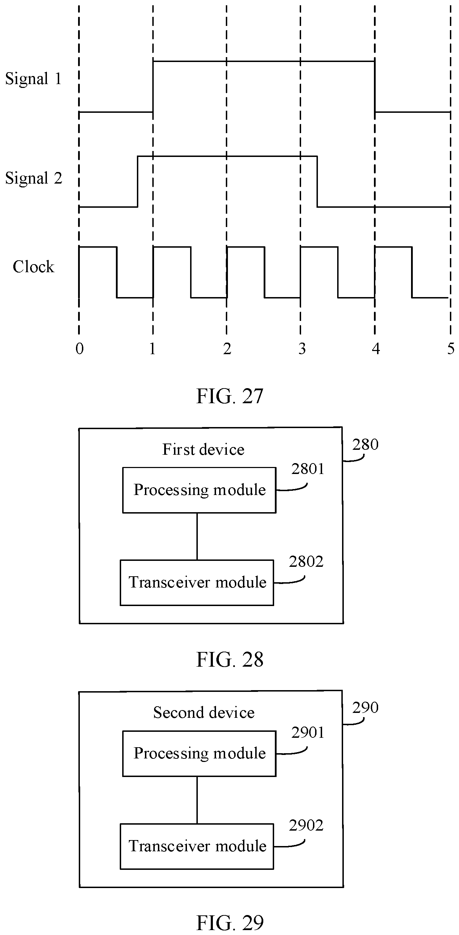

For example, FIG. 27 is a diagram in which the second device measures a time length of a high-level part by using the counter. A time length of a signal 1 is three clock cycles, and a boundary of the signal 1 is aligned with the clock boundary. Therefore, the signal 1 may be accurately counted as three clock cycles. A time length of a signal 2 is 2.5 clock cycles, a boundary of the signal 2 is not aligned with the clock boundary, and the counter can only perform integer counting.

Therefore, the signal 2 is counted as three clock cycles. In this case, an error is introduced. With reference to a manner of measuring the time length of the signal shown in FIG. 27, an error of measuring the time length of the signal by the second device may be obtained, as shown in Formula (4):

$$error = |M_1 - M_2|/M_2 \qquad\qquad Formula\ (4)$$

error represents an error, $M_1$ represents a measurement count of measuring the time length of the signal by the second device, and $M_2$ represents a real count of an actual clock cycle of a real clock of the time length of the signal. $M_2$ is in direct proportion to M.

Optionally, in this embodiment of this application, M is a maximum value of a plurality of values that satisfy the first condition. In other words, a larger value of M indicates a smaller error in measuring the time length of the second signal by the second device.

The following lists several structures of the synchronization signal and corresponding first sequences, to further describe the synchronization signal in this embodiment of this application.

Example 1: The synchronization signal includes the first signal. The first sequence for generating the synchronization signal may be [000000000000]. Alternatively, the first sequence for generating the synchronization signal may be [000110]. Alternatively, the first sequence for generating the synchronization signal may be [001100].

Optionally, in a possible implementation, the waveform of the synchronization signal is generated in the CP-OFDM manner by performing the DFT transform precoding on the first sequence. The first signal may be used as a wake-up signal, and the first signal may be used to wake up the second device. In other words, after the second device receives the first signal from the first device, the counter of the second device starts to work, and starts to detect the time length of the received signal, to receive and demodulate the downlink data. In other words, before the second device receives the first signal, the counter of the second device does not work, and may not detect the time length of the received signal, to achieve the energy saving effect.

Example 2: The synchronization signal may include the first signal and the second signal.

Optionally, the first sequence for generating the synchronization signal may be [0000000000001111001111100]. The first signal may correspond to [000000000000] in the first sequence, and the second signal corresponds to [111100] in the first sequence. Alternatively, the second signal may correspond to [111100] at an end position in the first sequence; or the second signal may correspond to [111100] that is not at an end position in the first sequence.

Optionally, the first sequence may be [000000000000111111111100]. The first signal corresponds to [000000000000] in the first sequence, and the second signal corresponds to [111111111100] in the first sequence.

Optionally, the first sequence for generating the synchronization signal may be [000110111100]. The first signal may correspond to [000110] in the first sequence, and the second signal corresponds to [111100] in the first sequence.

Optionally, the first sequence may be [001100111100]. The first signal corresponds to [001100] in the first sequence, and the second signal corresponds to [111100] in the first sequence.

Optionally, in a possible implementation, the waveform of the synchronization signal is generated in the CP-OFDM manner by performing the DFT transform precoding on the first sequence. The first signal may be used as a wake-up signal, and the first signal may be used to wake up the second device. In other words, after the second device receives the first signal from the first device, the counter of the second device starts to work, and starts to detect the time length of the received signal, to receive and demodulate the downlink data. In other words, before the second device receives the first signal, the counter of the second device does not work, and may not detect the time length of the received signal, to achieve the energy saving effect.

Optionally, in a possible implementation, an antenna port used by the first device to send the first signal is the same as an antenna port used by the first device to send the second signal.

Optionally, in a possible implementation, an antenna port used by the second device to receive the first signal is the same as an antenna port used by the second device to receive the second signal.

Optionally, in a possible implementation, the length of the CP in the OFDM symbol in which the first signal is located is the same as a length of a CP in an OFDM symbol in which the second signal is located.

Optionally, in a possible implementation, a CP type of the OFDM symbol in which the first signal is located is the same as a CP type of the OFDM symbol in which the second signal is located. For example, both the CP type of the OFDM symbol in which the first signal is located and the CP type of the OFDM symbol in which the second signal is located are extended CPs; or both the CP type of the OFDM symbol in which the first signal is located and the CP type of the OFDM symbol in which the second signal is located are normal CPs.

Optionally, in a possible implementation, the subcarrier spacing of the first signal is the same as a subcarrier spacing of the second signal.

Optionally, as shown in FIG. 11, the synchronization method according to this embodiment of this application may further include the following step.

S1104: The second device sends capability information to the first device. Correspondingly, the first device receives the capability information from the second device. In other words, the second device may report the capability information to the first device.

Optionally, the capability information may include one or more of the following: whether the second device supports energy harvesting, whether the second device supports envelope detection, or whether the second device supports backscatter communication.

It should be understood that, that the second device supports the energy harvesting may mean that the second device supports autonomously obtaining another type of energy (for example, solar light energy, temperature difference heat energy, vibration energy, wind energy, or radio frequency energy) from an environment, and converting the energy into electric energy. An advantage of the energy harvesting is that a battery is replaced to supply power to a device or supplement battery energy. In this way, a service life of the device is prolonged. Energy generated in an energy harvesting manner may be provided to a signal processing or data storage circuit of the second device, to maintain a normal operating state of the second device.

It should be understood that, that the second device supports the envelope detection may mean that the second device supports reception of a signal in an envelope detection manner. The signal may be a signal from the first device.

The envelope detection may be a signal detection method in which an envelope or an amplitude line of a low-frequency original signal is obtained through half-wave or full-wave rectification on a high-frequency or intermediate-frequency input signal. In this way, after receiving the signal in the envelope detection manner, the second device may obtain the envelope of the original signal. Further, the second device may perform digital sampling on the envelope of the original signal, and compare the envelope with an amplitude or an energy threshold set by the second device, to determine whether the received signal is 1 or 0. It is clear that the second device may alternatively determine, in another implementation, whether the received signal is 1 or 0. This is not specifically limited in this embodiment of this application.

It should be understood that, that the second device supports the backscatter communication may mean that the second device supports information transfer to the first device when the second device does not have a radio frequency link for active transmission; or the second device supports information transfer to the first device when the second device has a radio frequency link for active transmission but the link does not need to be enabled. In other words, in this case, the second device mainly relies on an excitation device other than the first device or a continuous carrier transmitted by the first device, to perform modulation. For example, the second device may reflect some or all incident carriers by adjusting impedance of an antenna of the second device; or the second device may not reflect an incident carrier or may absorb energy of an incident carrier by adjusting impedance of an antenna of the second device. In this way, the second device can modulate digital information of the second device onto the incident carrier by adjusting the impedance of the antenna of the second device, and transfer the digital information to the first device.

Optionally, in this embodiment of this application, a maximum bandwidth supported by the second device is limited.

Optionally, in a possible implementation, a maximum uplink bandwidth supported by the second device does not exceed X1.

For example, X1 is 20 MHz, 5 MHz, 3 MHz, 1.4 MHz, 1 MHz, 720 kHz, 540 kHz, 360 kHz, or 180 kHz.

Optionally, X1 is K1 resource blocks, and K1 is a positive integer.

For example, K1 is a positive integer less than or equal to 11, a positive integer less than or equal to 25, a positive integer less than or equal to 51, or a positive integer less than or equal to 106.

Optionally, in another possible implementation, a maximum downlink bandwidth supported by the second device does not exceed Y1.

For example, Y1 is 20 MHz, 5 MHz, 3 MHz, 1.4 MHz, 1 MHz, 720 kHz, 540 kHz, 360 kHz, or 180 kHz.

Optionally, Y1 is K2 resource blocks, and K2 is a positive integer.

For example, K2 is a positive integer less than or equal to 11, a positive integer less than or equal to 25, a positive integer less than or equal to 51, or a positive integer less than or equal to 106.

Optionally, in this embodiment of this application, the maximum uplink bandwidth supported by the second device is less than or equal to the maximum downlink bandwidth supported by the second device.

Optionally, in this embodiment of this application, the second device supports a limited quantity of transmit antennas and/or receive antennas.

Optionally, a quantity of receive antennas of the second device does not exceed X2. X2 is 1, 2, or 4.

Optionally, a quantity of receive branches (Rx branches) of the second device does not exceed X2. X2 is 1, 2, or 4.

Optionally, a quantity of transmit antennas of the second device does not exceed Y2. Y2 is 1, 2, or 4.

Optionally, a quantity of transmit branches of the second device does not exceed Y2. Y2 is 1, 2, or 4.

Optionally, the quantity of transmit antennas of the second device is greater than or equal to the quantity of receive antennas of the second device.

Optionally, the quantity of transmit branches of the second device is greater than or equal to the quantity of receive branches of the second device.

It should be noted that, in this embodiment of this application, the "receive branch" may also be referred to as a "quantity of receive radio frequency channels" or a "quantity of receive radio frequency chains (RF chains)", and the "transmit branch" may also be referred to as a "quantity of transmit radio frequency channels" or a "quantity of transmit radio frequency chains".

It should be noted that the second device may not simultaneously perform transmission and reception in a serving cell having a paired spectrum (paired spectrum).

It may be understood that in the foregoing embodiments, the methods and/or steps implemented by the first device may be alternatively implemented by a component (for example, a processor, a chip, a chip system, a circuit, a logical module, or software) that may be used in the first device, and the methods and/or steps implemented by the second device may be alternatively implemented by a component (for example, a processor, a chip, a chip system, a circuit, a logical module, or software) that may be used in the second device.

The foregoing mainly describes the solutions provided in this application. Correspondingly, this application further provides a communication apparatus. The communication apparatus is configured to implement the methods in the foregoing method embodiments. The communication apparatus may be the first device in the method embodiments, an apparatus including the first device, or a component that may be used in the first device, for example, a chip or a chip system. Alternatively, the communication apparatus may be the second device in the method embodiments, an apparatus including the second device, or a component that may be used in the second device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

For example, the communication apparatus is the first device in the foregoing method embodiments. FIG. 28 is a diagram of a structure of a first device 280. The first device 280 includes a processing module 2801 and a transceiver module 2802.

In some embodiments, the first device 280 may further include a storage module (not shown in FIG. 28), configured to store program instructions and data.

In some embodiments, the processing module 2801 is configured to generate a synchronization signal. The transceiver module 2802 is configured to send the synchronization signal to a second device. The synchronization signal is generated in an OFDM manner, the synchronization signal includes a first signal and/or a second signal, the first signal is used to determine a time domain start position occupied by data sent by the first device to the second device, and the second signal is used to determine a frequency at which the second device sends data to the first device.

In some embodiments, the synchronization signal includes the first signal and the second signal, and the second signal is located after the first signal.

In some embodiments, the first signal and the second signal are located in a same OFDM symbol.

In some embodiments, a waveform of the synchronization signal is a CP-OFDM waveform.

In some embodiments, the waveform of the synchronization signal is generated in a CP-OFDM manner based on a first sequence.

In some embodiments, the waveform of the synchronization signal is generated in a DFT transform precoding manner.

In some embodiments, that the waveform of the synchronization signal is generated in a DFT transform precoding manner includes: The waveform of the synchronization signal is a waveform obtained through CP-OFDM on a second sequence, where the second sequence is a sequence obtained through DFT transform precoding on the first sequence.

In some embodiments, a time domain resource of the first signal includes first $K$ time units in $N$ time units corresponding to a wanted signal in one OFDM symbol, $K$ is a positive integer, and the wanted signal in the OFDM symbol is a part that carries wanted information or wanted data and that is in the OFDM symbol.

In some embodiments, the time domain resource of the first signal further includes a part of time units corresponding to a CP in the OFDM symbol in which the first signal is located.

In some embodiments, a signal carried in last S time units in the N time units corresponding to the wanted signal in the OFDM symbol in which the first signal is located is a low-level signal, a time length of the last S time units is greater than or equal to a time length of the CP in the OFDM symbol in which the first signal is located, and the wanted signal in the OFDM symbol is the part that carries the wanted information or wanted data and that is in the OFDM symbol.

In some embodiments, a time domain resource of the second signal includes M of the N time units corresponding to the wanted signal in the OFDM symbol, M is a positive integer, and the wanted signal in the OFDM symbol is the part that carries the wanted information or wanted data and that is in the OFDM symbol.

In some embodiments, the synchronization signal includes the second signal, the waveform of the synchronization signal is generated in the CP-OFDM manner by performing the DFT transform precoding on the first sequence, the first sequence includes a third sequence, the third sequence is a sequence used to generate the second signal, M satisfies a first condition, and the first condition includes:

N is L times of M, and a quantity of elements included in the first sequence is L times of a quantity of elements included in the third sequence, where N is a power of 2, and L is a positive integer.

In some embodiments, M is a maximum value of a plurality of values that satisfy the first condition.

In some embodiments, the transceiver module 2802 is further configured to receive capability information from the second device. The capability information includes at least one of the following: whether the second device supports energy harvesting, whether the second device supports envelope detection, or whether the second device supports backscatter communication.

All related content of the steps in the foregoing method embodiments may be cited in function descriptions of the corresponding functional modules. Details are not described herein again.

In this application, the first device 280 is presented with the functional modules obtained through division in an integrated manner. The "module" herein may be an application-specific integrated circuit ASIC, a circuit, a processor that executes one or more software or firmware programs and a memory, an integrated logic circuit, and/or another component that can provide the foregoing functions.

In some embodiments, when the first device 280 is an access network device, in hardware implementation, a person skilled in the art may figure out that the first device 280 may be in a form of the access network device 1010 shown in FIG. 10.

In an example, a function/implementation process of the processing module 2801 in FIG. 28 may be implemented by the processor 1011 in the access network device 1010 shown in FIG. 10 by invoking the computer-executable instructions stored in the memory 1012. A function/implementation process of the transceiver module 2802 in FIG. 28 may be implemented by the transceiver 1013 in the access network device 1010 shown in FIG. 10.

In some embodiments, when the first device 280 is a terminal device, in hardware implementation, a person skilled in the art may figure out that the first device 280 may be in a form of the terminal device 1000 shown in FIG. 10.

In an example, a function/implementation process of the processing module 2801 in FIG. 28 may be implemented by the processor 1001 in the terminal device 1000 shown in FIG. 10 by invoking the computer-executable instructions stored in the memory 1002. A function/implementation process of the transceiver module 2802 in FIG. 28 may be implemented by the transceiver 1003 in the terminal device 1000 shown in FIG. 10.

In some embodiments, when the first device 280 in FIG. 28 is a chip or a chip system, the function/implementation process of the transceiver module 2802 may be implemented by an input/output interface (or a communication interface) of the chip or the chip system, and the function/implementation process of the processing module 2801 may be implemented by a processor (or a processing circuit) of the chip or the chip system.

The first device 280 provided in this embodiment may perform the foregoing synchronization method. Therefore, for technical effects that can be achieved by the first device 280, refer to the foregoing method embodiments. Details are not described herein again.

For example, the communication apparatus is the second device in the foregoing method embodiments. FIG. 29 is a diagram of a structure of a second device 290. The second device 290 includes a processing module 2901 and a transceiver module 2902.

In some embodiments, the second device 290 may further include a storage module (not shown in FIG. 29), configured to store program instructions and data.

In some embodiments, the transceiver module 2902 may also be referred to as a transceiver unit, and is configured to implement a sending function and/or a receiving function. The transceiver module 2902 may include a transceiver circuit, a transceiver machine, a transceiver, or a communication interface.

In some embodiments, the transceiver module 2902 may include a receiving module and a sending module, respectively configured to perform receiving steps and sending steps performed by the second device in the foregoing method embodiments, and/or configured to support other processes of the technologies described in this specification. The processing module 2901 may be configured to perform processing (for example, determining) steps performed by the second device in the foregoing method embodiments, and/or configured to support other processes of the technologies described in this specification. For example, the transceiver module 2902 is configured to receive a synchronization signal from a first device; and the processing module 2901 is configured to perform time synchronization and/or frequency synchronization based on the synchronization signal, where the synchronization signal is generated in an OFDM manner, the synchronization signal includes a first signal and/or a second signal, the first signal is used to determine a time domain start position occupied by data sent by the first device to the second device, and the second signal is used to determine a frequency at which the second device sends data to the first device.

In some embodiments, the synchronization signal includes the first signal and the second signal, and the second signal is located after the first signal.

In some embodiments, the first signal and the second signal are located in a same OFDM symbol.

In some embodiments, a waveform of the synchronization signal is a CP-OFDM waveform.

In some embodiments, the waveform of the synchronization signal is generated in a CP-OFDM manner based on a first sequence.

In some embodiments, the waveform of the synchronization signal is generated in a DFT transform precoding manner.

In some embodiments, that the waveform of the synchronization signal is generated in a DFT transform precoding manner includes: The waveform of the synchronization signal is a waveform obtained through CP-OFDM on a second sequence, where the second sequence is a sequence obtained through DFT transform precoding on the first sequence.

In some embodiments, a time domain resource of the first signal includes first K time units in N time units corresponding to a wanted signal in one OFDM symbol, K is a positive integer, and the wanted signal in the OFDM symbol is a part that carries wanted information or wanted data and that is in the OFDM symbol.

In some embodiments, the time domain resource of the first signal further includes a part of time units corresponding to a CP in the OFDM symbol in which the first signal is located.

In some embodiments, a signal carried in last S time units in the N time units corresponding to the wanted signal in the OFDM symbol in which the first signal is located is a low-level signal, a time length of the last S time units is greater than or equal to a time length of the CP in the OFDM symbol in which the first signal is located, and the wanted signal in the OFDM symbol is the part that carries the wanted information or wanted data and that is in the OFDM symbol.

In some embodiments, a time domain resource of the second signal includes M of the N time units corresponding to the wanted signal in the OFDM symbol, M is a positive integer, and the wanted signal in the OFDM symbol is the part that carries the wanted information or wanted data and that is in the OFDM symbol.

In some embodiments, the synchronization signal includes the second signal, the waveform of the synchronization signal is generated in the CP-OFDM manner by performing the DFT transform precoding on the first sequence, the first sequence includes a third sequence, the third sequence is a sequence used to generate the second signal, M satisfies a first condition, and the first condition includes:

N is L times of M, and a quantity of elements included in the first sequence is L times of a quantity of elements included in the third sequence, where N is a power of 2, and L is a positive integer.

In some embodiments, M is a maximum value of a plurality of values that satisfy the first condition.

In some embodiments, the transceiver module 2902 is further configured to send capability information to the first device. The capability information includes at least one of the following: whether the second device supports energy harvesting, whether the second device supports envelope detection, or whether the second device supports backscatter communication.

All related content of the steps in the foregoing method embodiments may be cited in function descriptions of the corresponding functional modules. Details are not described herein again.

In this application, the second device 290 is presented with the functional modules obtained through division in an integrated manner. The "module" herein may be an application-specific integrated circuit ASIC, a circuit, a processor that executes one or more software or firmware programs and a memory, an integrated logic circuit, and/or another component that can provide the foregoing functions.

In some embodiments, when the second device 290 is a terminal device, in hardware implementation, a person skilled in the art may figure out that the second device 290 may be in a form of the terminal device 1000 shown in FIG. 10.

In an example, a function/implementation process of the processing module 2901 in FIG. 29 may be implemented by the processor 1001 in the terminal device 1000 shown in FIG. 10 by invoking the computer-executable instructions stored in the memory 1002. A function/implementation process of the transceiver module 2902 in FIG. 29 may be implemented by the transceiver 1003 in the terminal device 1000 shown in FIG. 10.

In some embodiments, when the second device 290 in FIG. 29 is a chip or a chip system, the function/implementation process of the transceiver module 2902 may be implemented by an input/output interface (or a communication interface) of the chip or the chip system, and the function/implementation process of the processing module 2901 may be implemented by a processor (or a processing circuit) of the chip or the chip system.

The second device 290 provided in this embodiment may perform the foregoing synchronization method. Therefore, for technical effects that can be achieved by the second device 290, refer to the foregoing method embodiments. Details are not described herein again.

In some embodiments, the first device or the second device in this application may be further implemented by one or more field programmable gate arrays (field programmable gate arrays, FPGAs), a programmable logic device (programmable logic device, PLD), a controller, a state machine, gate logic, a discrete hardware component, any other appropriate circuit, or any combination of circuits that can perform various functions described in this application.

In some embodiments, this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. It is clear that the communication apparatus may not include the memory.

In another possible implementation, the communication apparatus further includes an interface circuit. The interface circuit is a code/data read/write interface circuit, and the interface circuit is configured to: receive computer-executable instructions (where the computer-executable instructions are stored in a memory, and may be directly read from the memory, or may be read via another component), and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiment. Details are not described herein again.

It may be understood that the system, the apparatus, and the method described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate components may or may not be physically separate, that is, may be located in one position, or may be distributed on a plurality of network units. Components displayed as units may be or may be not physical units. Some or all of the units may be selected based on an actual requirement, to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by software, hardware, firmware, or any combination thereof. When a software program is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A synchronization method, wherein the method comprises:

    generating, by a first device, a synchronization signal, wherein the synchronization signal is generated in an orthogonal frequency division multiplexing OFDM manner, the synchronization signal comprises a first signal and/or a second signal, the first signal is used to determine a time domain start position occupied by data sent by the first device to a second device, and the second signal is used to determine a frequency at which the second device sends data to the first device; and
    sending, by the first device, the synchronization signal to the second device.

2. The method according to claim 1, wherein the synchronization signal comprises the first signal and the second signal, and the second signal is after the first signal.

3. The method according to claim 2, wherein the first signal and the second signal are located in a same OFDM symbol.

4. The method according to any one of claims 1 to 3, wherein a waveform of the synchronization signal is a cyclic prefix-orthogonal frequency division multiplexing CP-OFDM waveform.

5. The method according to claim 4, wherein the waveform of the synchronization signal is generated in a CP-OFDM manner based on a first sequence.

6. The method according to claim 4 or 5, wherein the waveform of the synchronization signal is generated in a discrete fourier transform DFT transform precoding manner.

7. The method according to claim 6, wherein that the waveform of the synchronization signal is generated in a discrete fourier transform DFT transform precoding manner comprises:
    the waveform of the synchronization signal is a waveform obtained through CP-OFDM on a second sequence, wherein the second sequence is a sequence obtained through DFT transform precoding on the first sequence.

8. The method according to any one of claims 1 to 7, wherein a time domain resource of the first signal comprises first K time units in N time units corresponding to a wanted signal in one OFDM symbol, K is a positive integer, and the wanted signal in the OFDM symbol is a part other than a cyclic prefix CP in the OFDM symbol.

9. The method according to claim 8, wherein the time domain resource of the first signal further comprises a part of time units corresponding to the CP in the OFDM symbol in which the first signal is located.

10. The method according to any one of claims 1 to 9, wherein a signal carried in last S time units in the N time units corresponding to the wanted signal in the OFDM symbol in which the first signal is located is a low-level signal, a time length of the last S time units is greater than or equal to a time length of the CP in the OFDM symbol in which the first signal is located, and the wanted signal in the OFDM symbol is the part other than the CP in the OFDM symbol.

11. The method according to any one of claims 1 to 10, wherein a time domain resource of the second signal comprises M of the N time units corresponding to the wanted signal in the OFDM symbol, M is a positive integer, and the wanted signal in the OFDM symbol is the part other than the CP in the OFDM symbol.

12. The method according to claim 11, wherein the synchronization signal comprises the second signal, the waveform of the synchronization signal is generated in the CP-OFDM manner by performing the DFT transform precoding on the first sequence, the first sequence comprises a third sequence, the third sequence is a sequence used to generate the second signal, M satisfies a first condition, and the first condition comprises:
N is L times of M, and a quantity of elements comprised in the first sequence is L times of a quantity of elements comprised in the third sequence, wherein N is a power of 2, and L is a positive integer.

13. The method according to claim 12, wherein M is a maximum value of a plurality of values that satisfy the first condition.

14. A synchronization method, comprising:

receiving, by a second device, a synchronization signal from a first device, wherein the synchronization signal is generated in an orthogonal frequency division multiplexing OFDM manner, the synchronization signal comprises a first signal and/or a second signal, the first signal is used to determine a start position occupied by data sent by the first device to the second device, and the second signal is used to determine a frequency at which the second device sends data to the first device; and
performing, by the second device, time synchronization and/or frequency synchronization based on the synchronization signal.

15. The method according to claim 14, wherein the synchronization signal comprises the first signal and the second signal, and the second signal is after the first signal.

16. The method according to claim 15, wherein the first signal and the second signal are located in a same OFDM symbol.

17. The method according to any one of claims 14 to 16, wherein a waveform of the synchronization signal is a cyclic prefix-orthogonal frequency division multiplexing CP-OFDM waveform.

18. The method according to claim 17, wherein the waveform of the synchronization signal is generated in a CP-OFDM manner based on a first sequence.

19. The method according to claim 17 or 18, wherein the waveform of the synchronization signal is generated in a discrete fourier transform DFT transform precoding manner.

20. The method according to claim 19, wherein that the waveform of the synchronization signal is generated in a discrete fourier transform DFT transform precoding manner comprises:
the waveform of the synchronization signal is a waveform obtained through CP-OFDM on a second sequence, wherein the second sequence is a sequence obtained through DFT transform precoding on the first sequence.

21. The method according to any one of claims 14 to 20, wherein a time domain resource of the first signal comprises first K time units in N time units corresponding to a wanted signal in one OFDM symbol, K is a positive integer, and the wanted signal in the OFDM symbol is a part other than a CP in the OFDM symbol.

22. The method according to claim 21, wherein the time domain resource of the first signal further comprises a part of time units corresponding to the CP in the OFDM symbol in which the first signal is located.

23. The method according to any one of claims 14 to 22, wherein a signal carried in last S time units in the N time units corresponding to the wanted signal in the OFDM symbol in which the first signal is located is a low-level signal, a time length of the last S time units is greater than or equal to a time length of the CP in the OFDM symbol in which the first signal is located, and the wanted signal in the OFDM symbol is the part other than the CP in the OFDM symbol.

24. The method according to any one of claims 14 to 23, wherein a time domain resource of the second signal comprises M of the N time units corresponding to the wanted signal in the OFDM symbol, M is a positive integer, and the wanted signal in the OFDM symbol is the part other than the CP in the OFDM symbol.

25. The method according to claim 24, wherein the synchronization signal comprises the second signal, the waveform of the synchronization signal is generated in the CP-OFDM manner by performing the DFT transform precoding on the first sequence, the first sequence comprises a third sequence, the third sequence is a sequence used to generate the second signal, M satisfies a first condition, and the first condition comprises:
N is L times of M, and a quantity of elements comprised in the first sequence is L times of a quantity of elements comprised in the third sequence, wherein N is a power of 2, and L is a positive integer.

26. The method according to claim 25, wherein M is a maximum value of a plurality of values that satisfy the first condition.

27. A communication apparatus, wherein the communication apparatus is configured to perform the synchronization method according to any one of claims 1 to 13.

28. A communication apparatus, wherein the communication apparatus is configured to perform the synchronization method according to any one of claims 14 to 26.

29. A communication apparatus, comprising: a processor, wherein the processor is coupled to a memory; and the processor is configured to execute a computer program stored in the memory, to enable the communication apparatus to perform the synchronization method according to any one of claims 1 to 26.

30. A communication apparatus, comprising:

   a processor and an interface circuit, wherein
   the interface circuit is configured to: receive code instructions and transmit the code instructions to the processor; and
   the processor is configured to run the code instructions to perform the method according to any one of claims 1 to 26.

31. A communication apparatus, wherein the communication apparatus comprises a processor and a transceiver, the transceiver is used for information exchange between the communication apparatus and another communication apparatus, and the processor executes program instructions to perform the synchronization method according to any one of claims 1 to 26.

32. A computer-readable storage medium, wherein the computer-readable storage medium comprises a computer program or instructions, and when the computer program or the instructions are run on a computer, the computer is enabled to perform the synchronization method according to any one of claims 1 to 26.

33. A computer program product, wherein the computer program product comprises a computer program or instructions, and when the computer program or the instructions are run on a computer, the computer is enabled to perform the synchronization method according to any one of claims 1 to 26.

34. A synchronization method, wherein the method comprises:

   generating, by a first device, a synchronization signal, wherein the synchronization signal is generated in an orthogonal frequency division multiplexing OFDM manner, the synchronization signal comprises a first signal and/or a second signal, the first signal is used to determine a time domain start position occupied by data sent by the first device to a second device, and the second signal is used to determine a frequency at which the second device sends data to the first device;
   sending, by the first device, the synchronization signal to the second device;
   receiving, by the second device, the synchronization signal from the first device; and
   performing, by the second device, time synchronization and/or frequency synchronization based on the synchronization signal.

35. A communication system, wherein the communication system comprises a first device and a second device, the first device is configured to implement the synchronization method according to any one of claims 1 to 13, and the second device is configured to indicate to implement the synchronization method according to any one of claims 14 to 26.

FIG. 1

FIG. 2

FIG. 3

data-0: data 0
data-1: data 1
Tari: type A reference interval
PW: pulse width
$T_{data-1}$: time length of the data 1

FIG. 4

| Frame header 501 | Downlink data 502 | Check code 503 |
|---|---|---|

FIG. 5

delimiter: delimiter
data-0: data 0
RTcal: reader-tag calibration
TRcal: tag-reader calibration
Tari: type A reference interval

PW: pulse width
$T_{delimiter}$: time length of the delimiter
$T_{RTcal}$: time length of the reader-tag calibration
$T_{TRcal}$: time length of the tag-reader calibration

$T_{delimiter}$  Tari  $2.5Tari{\leq}T_{RTcal}{\leq}3Tari$  $1.1T_{RTcal}{\leq}T_{TRcal}{\leq}3T_{RTcal}$

PW   PW   PW

delimiter   data-0   RTcal   TRcal

FIG. 6

delimiter: delimiter
data-0: data 0
RTcal: reader-tag calibration
Tari: type A reference interval

PW: pulse width
$T_{delimiter}$: time length of the delimiter
$T_{RTcal}$: time length of the reader-tag calibration

$T_{delimiter}$   Tari   $2.5Tari{\leq}T_{RTcal}{\leq}3Tari$

PW   PW

delimiter   data-0   RTcal

FIG. 7

801 Synchronization signal   802

First device → Second device

FIG. 8

FIG. 9

EP 4 529 302 A1

Terminal
device 1000

Access network
device 1010

FIG. 10

FIG. 11

Synchronization signal

| OFDM symbol #0 | OFDM symbol #1 | OFDM symbol #2 |

FIG. 12

Synchronization signal

| OFDM symbol #0 | OFDM symbol #1 | OFDM symbol #2 |

FIG. 13

| Synchronization signal | Downlink data |

| OFDM symbol #0 | OFDM symbol #1 |

FIG. 14

Guard interval

Payload

$T_{GI}$        $T_{payload}$

OFDM symbol

FIG. 15

| Carrier signal | Synchronization signal | Downlink data |

| OFDM symbol #0 | OFDM symbol #1 | OFDM symbol #2 |

FIG. 16

Synchronization signal

First signal

Second signal

OFDM symbol #0

OFDM symbol #1

FIG. 17

Synchronization signal

First signal

Second signal

OFDM symbol #1

FIG. 18

First sequence → Subcarrier mapping → IFFT → CP addition

Amplitude

Time

FIG. 19

First sequence → DFT

Second sequence → Subcarrier mapping → IFFT → CP addition

Amplitude

Time

FIG. 20

Cyclic prefix

Payload

Synchronization signal | Downlink data

First signal

K time units

N time units

OFDM symbol #0 | OFDM symbol #1

FIG. 21

First signal | Second signal | Downlink data

Low level | Low-level part | Low-level part

FIG. 22

Long CP

Short CP

#0 #1 #2 #3 #4 #5 #6 #7 #8 #9 #10 #11 #12 #13

FIG. 23

FIG. 24

FIG. 25

FIG. 26

EP 4 529 302 A1

FIG. 27

FIG. 28

FIG. 29

## INTERNATIONAL SEARCH REPORT

International application No.

**PCT/CN2023/098657**

### A. CLASSIFICATION OF SUBJECT MATTER

H04W 56/00(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; CNKI; ENTXTC; DWPI; IEEE; 3GPP: 同步信号, 生成, 正交频分复用, 第一, 第二, 时域, 起始位置, 频率, synchronization signal, SS, generat+, OFDM, first, second, time domain, start location, frequency

### C. DOCUMENTS CONSIDERED TO BE RELEVANT

| Category* | Citation of document, with indication, where appropriate, of the relevant passages | Relevant to claim No. |
|---|---|---|
| X | CN 107431679 B (HUAWEI TECHNOLOGIES CO., LTD.) 25 September 2020 (2020-09-25) description, paragraphs [0005]-[0030] and [0131]-[0155] | 1-35 |
| A | CN 107547463 A (SHARP CORP.) 05 January 2018 (2018-01-05) entire document | 1-35 |
| A | CN 113455061 A (SAMSUNG ELECTRONICS CO., LTD.) 28 September 2021 (2021-09-28) entire document | 1-35 |
| A | US 2020067753 A1 (NTT DOCOMO, INC.) 27 February 2020 (2020-02-27) entire document | 1-35 |
| A | HUAWEI et al. "Remaining Details on Synchronization Signal" *3GPP TSG RAN WG1 Meeting #92bis R1-1803625*, 20 April 2018 (2018-04-20), entire document | 1-35 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 September 2023** | **20 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| International application No. |
| --- |
| **PCT/CN2023/098657** |

| Patent document cited in search report | | | Publication date (day/month/year) | Patent family member(s) | | | Publication date (day/month/year) |
| --- | --- | --- | --- | --- | --- | --- | --- |
| CN | 107431679 | B | 25 September 2020 | EP | 3343856 | A1 | 04 July 2018 |
|  |  |  |  | EP | 3343856 | A4 | 12 September 2018 |
|  |  |  |  | EP | 3343856 | B1 | 28 October 2020 |
|  |  |  |  | US | 2018220387 | A1 | 02 August 2018 |
|  |  |  |  | US | 10362548 | B2 | 23 July 2019 |
|  |  |  |  | WO | 2017049716 | A1 | 30 March 2017 |
|  |  |  |  | CN | 107431679 | A | 01 December 2017 |
| CN | 107547463 | A | 05 January 2018 | WO | 2018001267 | A1 | 04 January 2018 |
| CN | 113455061 | A | 28 September 2021 | EP | 3906735 | A1 | 10 November 2021 |
|  |  |  |  | EP | 3906735 | A4 | 16 March 2022 |
|  |  |  |  | KR | 20200101045 | A | 27 August 2020 |
|  |  |  |  | US | 2020267674 | A1 | 20 August 2020 |
|  |  |  |  | WO | 2020171557 | A1 | 27 August 2020 |
| US | 2020067753 | A1 | 27 February 2020 | US | 11171819 | B2 | 09 November 2021 |
|  |  |  |  | JPWO | 2018131375 | A1 | 07 November 2019 |
|  |  |  |  | JP | 7118011 | B2 | 15 August 2022 |
|  |  |  |  | WO | 2018131375 | A1 | 19 July 2018 |

Form PCT/ISA/210 (patent family annex) (July 2022)

## REFERENCES CITED IN THE DESCRIPTION

**Patent documents cited in the description**

- CN 202210692328